# EUROPÄISCHE PATENTSCHRIFT

(11) **EP 2 858 472 B1**
(45) Veröffentlichungstag und Bekanntmachung des Hinweises auf die Patenterteilung: **22.11.2017**
(21) Anmeldenummer: 13734975.9
(22) Anmeldetag: 10.06.2013
(51) Int. Cl.: A01C 7/04

(54) **VERTEILAGGREGAT FÜR KÖRNIGES GUT, INSBESONDERE SÄAGGREGAT**
DISTRIBUTING DEVICE FOR GRANULAR MATERIAL, IN PARTICULAR SEEDING DEVICE
DISPOSITIF D'ÉPANDAGE POUR MATÉRIEL GRANULAIRE, EN PARTICULIER DISPOSITIF À SEMER

(30) Priorität: 12.06.2012 DE 102012105081
(43) Veröffentlichungstag der Anmeldung: 15.04.2015
(73) Patentinhaber: Horsch Maschinen GmbH, 92421 Schwandorf (DE)
(72) Erfinder: HORSCH, Thomas, 71691 Freiberg (DE)
(74) Vertreter: Benninger, Johannes
(86) Internationale Anmeldenummer: PCT/EP2013/061896
(87) Internationale Veröffentlichungsnummer: WO 2013/186161

(56) Entgegenhaltungen:
- CN-B- 100 998 281
- DE-B- 1 027 924
- US-A- 5 082 141

## Beschreibung

Die vorliegende Erfindung betrifft ein Verteilaggregat für körniges Gut wie Samenkörner, Dünger o. dgl. Sie betrifft insbesondere ein Säaggregat mit den Merkmalen des unabhängigen Anspruchs 1.

Verteilvorrichtungen für körniges Gut wie insbesondere Sämaschinen sind in zahlreichen Ausführungsvarianten bekannt. Herkömmlicherweise erfolgt die Kornförderung mit Hilfe eines Luftstromes, dem die Körner zudosiert werden. Anschließend wird der als Trägermedium dienende Luftstrom einem Verteiler zugeführt, der in eine Mehrzahl von Schlauchleitungen münden kann, die schließlich in nebeneinander angeordneten Scharen der Sämaschine enden können. Die Dosierung der Körner ermöglicht die Variation des Volumenstroms an ausgebrachten Körnern. Weitere Möglichkeiten, auf die Dosierung der Körner in den einzelnen Leitungen, die zu den Scharen führen, Einfluss zu nehmen, bestehen in der Regel nicht. Die Körner können zwar dem Luftstrom regelmäßig zugeführt werden. Allerdings wird die Stetigkeit der Kornzuführung während des luftunterstützten Transports mehr oder weniger beeinträchtigt, so dass die Kornablage an den Säscharen oftmals ungleichmäßig erfolgt, was zu Nachteilen bei der Standraumzuteilung der einzelnen Pflanzen führen kann.

Eine Einrichtung zur Verstetigung eines Gutstromes einer Drill- bzw. Sämaschine ist aus der DE 196 36 787 C1 bekannt. In erster Linie sollen damit die Partikel-, Granulat- oder Kornabstände im Bereich einer volumetrischen Kornförderung verstetigt werden, so dass die Körner in weitgehender Vereinzelung abgelegt werden können. Die Kornförderung in einer Säleitung nach einem Dosieraggregat bzw. in der Säschar erfolgt hierbei über eine aus Rinnen zusammengesetzte Kaskadenleitung oder -führung. bzw. eine Verteilrinne, über welche die Partikel oder Körner durch mehrmalige Richtungsänderungen vereinzelt und aufgereiht werden. Die Austragsleitung soll als mehrteilige Verteilleitung ausgebildet sein, deren einzelne Leitungselemente jeweils derart schräg zueinander angeordnet sind, dass sich die einzelnen Partikel durch den Einfluss der Schwerkraft hintereinander anordnen und zick-zack-förmig ausfließen, wobei zumindest das endseitige Leitungselement einen rinnenförmigen Querschnitt aufweist.

Eine für unterschiedliche Korngrößen und Samenarten universell einsetzbare Vorrichtung zum Vereinzeln und Abgeben von körnigem Gut, insbesondere eine Einzelkornsävorrichtung ist weiterhin in der DE 36 33 955 A1 offenbart. Hierzu wird ein rotierender schmaler Hohlzylinder mit Zellen bildenden Aussparungen an seiner offenen Stirnseite, einer feststehenden äußeren Abdeckung und einem innerhalb des Hohlzylinders angeordneten Abdeckring vorgeschlagen. Ein Vorratsbehälter ist durch eine Wand vom Hohlzylinder abgetrennt, die eine Öffnung zum Durchtritt einer begrenzten Menge an zu vereinzelndem Gut aufweist. Eine Länge der die Zellen bildenden Aussparungen soll ein Zwei- oder Mehrfaches der Länge der zu vereinzelnden Körner betragen. Zudem ist nahe einer hinteren Begrenzungsfläche der Aussparungen eine Saugöffnung vorgesehen. Der schnell rotierende Hohlzylinder nimmt einige Körner je Aussparung aus dem Körnervorrat auf, wobei die äußere Abdeckung die Aussparungen in der Befüllzone abdeckt und verhindert, dass die Körner herausfallen. Die Fliehkraft drückt die Körner in die Aussparungen, während ein Bürstenabstreifer für das Abstreifen überschüssiger Körner sorgt, die in den Vorrat zurückfallen. Im weiteren Bewegungsverlauf des Hohlzylinders endet eine äußere Begrenzungswand, so dass nicht vom Saugdruck festgehaltene Körner in den Aussparungen durch Fliehkräfte nach außen abgegeben werden und in den Vorrat zurückgeleitet werden. Ein zusätzlicher pneumatischer Abstreifer kann diese Korneinzelung unterstützen. Am Abgabeort wird der Unterdruck abgeschnitten, so dass die Körner aus den Aussparungen durch Fliehkraft und Schwerkraft abgegeben werden.

Die DE 38 22 437 A1 offenbart zudem eine Gutleiteinrichtung für derartige Einzelkornsäeinrichtungen, die dafür sorgen soll, dass überschüssige Gutteilchen aus den Aussparungen abgestreift und in einer Weise abgelenkt werden, dass sie vollständig dem Gutvorrat zugeführt werden.

Eine weitere Einzelkorndosiervorrichtung zur Einzelkornaussaat von Getreide ist aus der DE 41 16 724 A1 bekannt. Bei dieser bekannten Dosiervorrichtung sind bewegte Vereinzelungsöffnungen zur Anlagerung einzelner Körner durch löffelförmige Öffnungen in einer dünnwandigen Mantelfläche eines nach einer Seite offenen, rotierenden Zylinders gebildet. Die Iöffelförmigen Öffnungen überdecken sich mit einem Schlitz eines den Zylinder umschließenden Gehäuses, woraus die Ansaugöffnungen zum Ansaugen und zum vereinzelten Transport der Saatkörner gebildet sind.

Auch die DE 22 17 513 C3 offenbart eine Einzekorndosiervorrichtung mit einer rotierenden Verteilerscheibe, die zwei ringförmige Kränze mit Öffnungen zum Ansaugen einzelner Körner aufweist. Ein Abstreifer sorgt dafür, dass immer nur ein Loch eines Öffnungspaares der beiden Kränze mit einem Korn beaufschlagt ist, das anschließend abgegeben werden kann. Die CN 100 998 281 B offenbart ein Verteilaggregat gemäß dem Oberbegriff des Anspruchs 1.

Bei den bekannten Dosiereinrichtungen handelt es sich entweder um modifizierte Einzelkornsäaggregate, die zwar eine präzise Kornvereinzelung erlauben, die aber gegenüber volumetrisch dosierenden Drillmaschinen in ihrer Verarbeitungskapazität und in ihrem Kornvolumenstrom begrenzt sind und/oder in ihrem Aufbau und ihrer Funktion aufwändig und störanfällig sind. Die bekannt gewordenen Zusatzgeräte, welche die regelmäßige Abgabe der Saatkörner bei volumetrisch dosierenden Maschinen verbessern sollen, reichen hingegen nicht an die Vereinzelungsqualität herkömmlicher Einzelkornsäaggregate heran.

Ein vorrangiges Ziel der Erfindung besteht darin, die Abgabegenauigkeit und/oder die Kornabstände bei einer volumetrischen Kornförderung soweit zu verbessern, dass sich damit die Korndosierung hinsichtlich ihrer Vereinzelungsqualität einer Einzelkorndosierung annähert oder diese im Idealfall erreicht, wobei gleichzeitig ein hoher Kornvolumenstrom ermöglicht sein soll. Diese Vorgaben sollen mit einem einfachen, robusten und für Störungen wenig anfälligen Aufbau und einer einfachen Funktion, wie er/sie für volumetrisch dosierende Drillmaschinen charakteristisch ist/sind, erreicht werden.

Das Ziel der Erfindung wird mit dem Gegenstand des unabhängigen Anspruchs erreicht. Merkmale vorteilhafter Weiterbildungen der Erfindung ergeben sich aus den abhängigen Ansprüchen. Zur Erreichung des genannten Ziels schlägt die Erfindung ein Verteilaggregat für körniges Gut wie Samenkörner, Dünger o. dgl. mit den nachfolgend erläuterten Merkmalen vor, das insbesondere als Säaggregat einer Verteil- oder Sämaschine eingesetzt werden kann. Das erfindungsgemäße Verteilaggregat umfasst ein Gehäuse in einer zylindrischen Form mit wenigstens einer Einlassöffnung zur Aufnahme und für die Beförderung körnigen Gutes oder beförderter Samenkörner sowie einer Auslassöffnung zur Abgabe des körnigen Guts bzw. der Samenkörner in weitgehend regelmäßigen Abständen voneinander. Weiterhin umfasst das Aggregat eine im Gehäuse befindliche Fördereinrichtung mit wenigstens einem rotierenden, ungefähr axial und radial zur Innenseite des Gehäuses angeordneten bzw. verlaufenden Förderelement zur Erfassung, Handhabung, Förderung und/oder Aufreihung bzw. Gruppierung des körnigen Gutes bzw. der Samenkörner. Die Körner werden vorzugsweise mit einer gewissen Geschwindigkeit in das Gehäuse geleitet, so dass sie nach dem Passieren der Einlassöffnung mit Hilfe der dabei entstehenden Fliehkräfte sowie der inneren Gehäusegestaltung gelenkt, geleitet und in regelmäßige Anordnung gebracht werden können. So werden die Körner mit Hilfe der geschwindigkeitsbedingten Fliehkräfte an einem Innenmantelbereich des Gehäuses gehalten und können sich dort drängen und gegeneinander ausrichten und in einer Linie ordnen bzw. in einem Winkel aufreihen, der einer Winkelstellung zwischen der Mantelfläche und dem radialen Förderelement entspricht. Das Ziel dieser Ausrichtung besteht darin, am Ende dieser Aufreihung jeweils nur ein einzelnes Korn durch die Auslassöffnung zu entlassen, wobei die jeweils folgenden Körner immer in weitgehend konstanten Zeitabständen und/oder Kornabständen freigegeben und vom Gehäuse abgegeben werden. Die Anordnung und Gruppierung der schnell durch das Gehäuse geförderten Körner führt weiterhin dazu, dass diese in einer vordefinierten Bahn an der Mantelfläche der Gehäuseinnenseite entlang geführt und am Ende des Vereinzelungsprozesses die Auslassöffnung annähernd tangential verlassen.

Bei dem erfindungsgemäßen Verteilaggregat ist es weiterhin von Vorteil, wenn sich die vom Förderelement transportierten oder mitgenommenen Körner im Gehäuse nicht in einer zu dichten Packung zusammenballen, sondern mindestens einen einseitigen Freiraum haben oder bilden, um dadurch überschüssige Körner abdrängen zu können, damit sich am Förderelement eine annähernd lineare Kornausrichtung ausbilden kann. Mit linearer Kornausrichtung kann in diesem Zusammenhang insbesondere eine Kornausrichtung parallel zur Oberfläche des Förderelements bzw. parallel zur Längserstreckungsrichtung des Gehäuses gemeint sein. Die Aufreihung am Förderelement bzw_{.} im Innenmantelbereich des Gehäuses erfährt. einen leichten gerichteten Vorschub in eine axiale Richtung, um die Position des jeweils gezielt abgeführten Kornes sicher zu besetzen und um keine Lücken zu lassen, die zu unregelmäßigen Kornabständen führen würden.

Das Gehäuse kann insbesondere eine zylindrische, wahlweise auch eine einseitig konisch zulaufende Innenmantelfläche aufweisen. Darüber hinaus sind auch andere Gehäusekonturen denkbar, bspw. eine sich elliptisch oder mit anderer Kontur verjüngende oder erweiternde Gehäuseinnenseite. Die Innenmantelfläche des Gehäuses sollte hingegen keine ausgeprägten Stufen oder Kanten aufweisen, die dem Korntransport bzw. dem Kornfluss erhöhten Widerstand entgegensetzen könnten.

Eine bevorzugte Ausführungsvariante des erfindungsgemäßen Verteilaggregats ist mit einer durch die Einlassöffnung geführten Luftströmung beaufschlagt, die gleichzeitig das körnige Gut oder die Samenkörner fördert und das Gehäuse auch wieder durch die Auslassöffnung verlässt. Diese Luftströmung dient gleichzeitig dazu, die Körner im Gehäuse in Bewegung zu halten und auf ihrer vorgesehenen Bahn zu lenken und zu befördern. Die Körner können aus einem zentralen Behälter durch den Einlass herangeführt werden. Wahlweise können für die Körner auch kleinere Zwischenbehälter vorgesehen sein, die jedem Verteil- oder Vereinzelungsaggregat zugeordnet sind. Dort kann ggf. auch die Zudosierung der Körner zum tragenden Luftstrom erfolgen. Der Luftstrom, mit dem die Körner herangeführt werden, führt anschließend durch den Dosierer bzw. das Aggregat und trägt die abgegebenen Körner in der oder nach der Abgabe weiter. Der Luftstrom kann in vorteilhafter Weise dafür sorgen, dass die Körner auch bei einem Stillstand des Förderelementes mit dem tragenden Luftstrom weiterhin den Dosierer durchströmen können.

Anstelle der Verwendung eines tragenden Luftstroms kann die Kornförderung auch rein mechanisch erfolgen, insbesondere durch die Rotationsbewegung des Förderelements, das die Körner innerhalb des Gehäuses in eine kreis- oder spiralförmige Bewegung zwingt und dadurch für die gewünschte Vereinzelung sorgt, wenn die Körner durch die Auslassöffnung abgegeben werden. Hierbei kann das rotierende Förderelement insbesondere einen elektromotorischen Antrieb aufweisen, der je nach Bedarf eine Anpassung der Umdrehungsgeschwindigkeit ermöglicht.

Jedes geförderte Korn durchläuft vor der Kornabgabe durch den Auslass eine Kreisbewegung bzw. eine spiralförmige Bewegungsbahn, die einen Winkel von mindestens 360 Grad abdeckt, wobei es von dem wenigstens einen Förderelement auf einer annähernd zylindrischen bzw. konisch gestalteten Mantelfläche gehalten wird und gleichzeitig einen leichten axialen Vorschub in Richtung zur Kornabgabe am Auslass erfährt. In diesem Zusammenhang ist es sinnvoll, wenn der Vorschub der Körner zumindest im Bereich der Auslassöffnung für das letzte Korn - d.h. für das gerade abgegebene Korn - durch eine führende Kontur vorgegeben ist.

Als besonders vorteilhaft hat sich ein weiteres Ausstattungsmerkmal des erfindungsgemäßen Verteilaggregats erwiesen, bei dem die Innenmantelfläche des Gehäuses eine Strukturierung in Gestalt einer durchgängigen Spirale oder Führungsbahn aufweist, die von einer Stirnseite zur gegenüber liegenden Stirnseite oder einen Teilabschnitt davon reicht. Wahlweise kann diese spiralartige Strukturierung eine durchgängige konstante Steigung oder auch Abschnitte jeweils unterschiedlicher Steigungen aufweisen, wobei die Steigung zur Auslassöffnung hin vorzugsweise größer ist als im Bereich der Einlassöffnung. Wenn die Steigung in Richtung zur bzw. in zunehmender Nähe zur Auslassöffnung größer wird, so kann die dadurch gebildete Rillenbreite, die sich aus dieser Strukturierung ergibt, sinnvollerweise auf die Korngröße abgestimmt sein, so dass die Körner durch die mit der Strukturierung gebildeten spiralförmigen Rillen gleichsam gelenkt und geführt werden, bis sie einzeln nacheinander die Auslassöffnung passieren. Im vorderen Bereich, näher zum Einlass hin, kann die Strukturierung ggf. auch enger sein bzw. eine geringere Steigung aufweisen, da sich dort in aller Regel die Körner ohnehin stärker zusammenballen und einen Art Puffer bilden, so dass eine direkte Lenkung jedes einzelnen Kornes auf der durch die Strukturierung gebildeten Führungsbahn noch nicht gleichermaßen erforderlich ist wie in Richtung zum Kornauslass hin.

Als sinnvolle Größenordnungen für die Steigungen haben sich bspw. Maße von ca. 6 bis 7 mm je Windung am Ausgang und ca. 3 bis 3,5 mm je Windung am Eingang für die Aussaat von Weizensamen erwiesen. Je nach Korngröße sind auch andere Steigungsmaße möglich und sinnvoll.

Als besonderer vorteilhaft hat sich die Reinigungswirkung der Strukturierung herausgestellt, da sie das Anhaften und Verbleiben von Verunreinigungen und Fremdstoffen effektiv unterbinden kann. Während solche Fremdstoffe wie bspw. Grashalme an einer glatten, unstrukturierten Wand nur schwer mitgenommen werden, sorgt die Strukturierung im Zusammenhang mit der ständigen Kornbewegung für die Mitnahme aller solcher Verunreinigungen und Fremdstoffe, so dass sie ohne weitere Störungen aus dem Gehäuse ausgetragen werden.

Ein charakteristisches Merkmal des Verteilaggregats besteht darin, dass nahezu alle Körner im Dosierer in Bewegung sind, wobei diese Bewegung durch das Förderelement und/oder den Luftstrom bewirkt ist. Der Dosierer ist durch seine besondere Art der Kornförderung problemlos in der Lage, kurze Schwankungen oder Unregelmäßigkeiten im Kornzustrom auszugleichen und damit eine Pufferfunktion zu erfüllen, wenn der Kornvolumenstrom in der Zuführung schwanken sollte oder plötzlich abnimmt.

Die bspw. als gleichmäßig rotierende paddelartige Förderelemente ausgebildete Fördereinrichtung im Gehäuse ermöglicht im Zusammenhang mit der gleichmäßigen Luftströmung und der spiralförmigen Strukturierung der Innenmantelfläche des Gehäuses eine Vergleichmäßigung des Gutstroms (an Körnern, Saatkörnern etc.), die zu einer äquidistanten Abgabe am Auslass führt, was wiederum mit der gleichmäßigen und präzise einzuhaltenden Abgabegeschwindigkeit und Abgaberichtung für eine sehr gleichmäßige Kornvereinzelung sorgen kann.

Eine konkrete Ausgestaltung des erfindungsgemäßen Verteilaggregats für körniges Gut wie Samenkörner, Dünger o. dgl., das insbesondere ein Säaggregat einer Verteil- oder Sämaschine sein kann, weist ein Gehäuse mit zylindrischer Innenmantelfläche und wenigstens einer darin mündenden Einlassöffnung für eine Luftströmung und darin befördertem körnigen Gut auf. Im Gehäuse rotiert konzentrisch eine Fördereinrichtung für das in der Luftströmung getragene körnige Gut und fördert dies zur wenigstens einen Auslassöffnung, die annähernd tangential an die Innenmantelfläche anschließt. Die Fördereinrichtung weist wenigstens ein an der Innenmantelfläche entlang streichendes paddelartiges Förderelement auf. Zudem weist die Innenmantelfläche des Gehäuses eine Strukturierung in Gestalt einer durchgängigen Spirale auf, die von einer Stirnseite zur gegenüber liegenden Stirnseite reicht. Die spiralartige Strukturierung ist in Umdrehungsrichtung der Fördereinrichtung in Richtung zur Auslassöffnung gerichtet und mündet dort. Die spiralartige Strukturierung beginnt in Umdrehungsrichtung der Fördereinrichtung im Bereich der Einlassöffnung und verbindet auf diese Weise die Einlass- mit der Auslassöffnung, so dass die vom Luftstrom getragenen Körner die Einlassöffnung passieren, von der Fördereinrichtung in Verbindung mit der spiralartigen Strukturierung der Wände geordnet und vergleichmäßigt werden und schließlich die Auslassöffnung als weitgehend gleichmäßigen Gutstrom an Körnern verlassen.

Eine weitere Variante des erfindungsgemäßen Verteilaggregats sieht vor, dass eine Längsseite des wenigstens einen paddelartigen Förderelementes sich parallel zur Längserstreckungsrichtung des Gehäuses erstreckt, wobei eine Schmalseite des Förderelementes normalerweise kürzer ist als die Längsseite und bspw. weniger als die Hälfte des Innendurchmessers des Gehäuses misst. Wahlweise kann die rotierende Fördereinrichtung zwei, drei, vier oder mehr gleichartig oder unterschiedlich geformte paddelartige Förderelemente aufweisen, die jeweils gleichmäßig voneinander beabstandet an einer zentralen Welle angeordnet sind. Um Blockaden zu vermeiden, können die paddelartigen Förderelemente jeweils nachgiebig (ggf. auch federnd) an der zentralen Welle aufgehängt sein, so dass sie bei erhöhtem Widerstand ausweichen können.

Die Kornförderung kann ggf. dadurch verbessert werden, dass das wenigstens eine paddelartige Förderelement in Umdrehungsrichtung eine konkave Wölbung aufweist. Zudem ist es sinnvoll, wenn das wenigstens eine paddelartige Förderelement einen geringen Abstand zur Innenmantelfläche des Gehäuses aufweist, der kleiner ist als die Hälfte des kleinsten Korndurchmessers des auszubringenden Verteilgutes. Der Abstand der Förderelemente oder Förderpaddel zur Wand sollte ein Mindestmaß nicht unterschreiten, um Klemmerscheinungen zu verhindern, insbesondere bei in das Gehäuse geratenen Fremdstoffen oder Verunreinigungen. Der Abstand sollte allerdings auch nicht zu groß sein, damit keinesfalls Körner zwischen die Gehäusewand und die äußere Umfangskante der Förderelemente oder -paddel geraten und dort eingeklemmt werden können, was zu Störungen im Korntransport und zu Stauungen führen könnte. Ein Abstand von ca. 0,2 bis 0,5 mm zur Wand, insbesondere von ca. 0,3 mm, hat sich in der Praxis als tauglich erwiesen.

Außerdem sollte das wenigstens eine paddelartige Förderelement im Interesse einer hohen Verteil- und Vereinzelungsqualität in seiner Breite über einen Teil der Auslassöffnung reichen, so dass diese bei rotierender Fördereinrichtung überstrichen wird. Durch Einströmung einer gleichmäßigen, nicht pulsierenden Luftströmung mit ungefähr konstantem Volumenstrom an Luft und an mitgenommenen Körnern in das Gehäuseinnere mit der darin rotierenden Fördereinrichtung wird ein funktionierendes Einzelkornsäaggregat zur Verfügung gestellt, bei dem die Körner vereinzelt und in gleichmäßigen Abständen voneinander durch die Auslassöffnung abgegeben werden. Der erwähnte Volumenstrom an Luft kann wahlweise auch von der Fahrgeschwindigkeit der Zugmaschine abhängig gemacht werden. Zudem kann ein separater Antrieb des Förderelements ggf. entfallen, so dass dieses nur passiv vom Luftvolumenstrom in Rotation versetzt wird.

Die Umdrehungsgeschwindigkeit und die Anzahl der paddelartigen Förderelemente richtet sich sinnvollerweise nach dem jeweils geförderten und vereinzelten Saatgut. So hat sich bspw. für die Aussaat von Raps die Verwendung eines einzelnen Förderelements bzw. Förderpaddel als sinnvoll herausgestellt, das zudem relativ langsam rotieren sollte. Bei der Aussaat von Weizen haben sich jedoch zwei gegenüber liegend angeordnete Förderelemente bzw. Förderpaddel, die relativ schnell rotieren - bspw. mit einer Frequenz von ca. 25 bis 50 Hz - als sinnvolle Bauvariante herausgestellt. Bei zwei Förderelementen ergibt sich daraus eine Kornfrequenz bei der Abgabe von ca. 50 bis 100 Hz.

Eine zentrale Welle der Fördereinrichtung kann bspw. elektromotorisch angetrieben sein. Wahlweise können die paddelartigen Förderelemente bei einer einfachen Antriebsvariante der Fördereinrichtung auch über die durch die Einlassöffnung ins Gehäuse geleitete Luftströmung angetrieben sein. Die Paddel können für eine höhere Abgabegenauigkeit wahlweise elektromotorisch angetrieben sein, wobei im Interesse einer konstanten und äquidistanten Kornabgabe eine Modulierung der Antriebsdrehzahl nicht wünschenswert ist, sondern lediglich eine Anpassung an die Fahrgeschwindigkeit der zugehörigen Trägermaschine (z.B. der Sämaschine). Bei einem je nach gewünschter Ablagepräzision durchaus sinnvollen Verzicht auf einen motorischen Antrieb der Fördereinrichtung sorgt nur der Luftstrom, der durch die Einlassöffnung in das Gehäuse tritt und die Körner mitträgt, für den Antrieb der Fördereinrichtung bzw. der Förderelemente, was zwangsläufig mit einem Verlust der Ablagegenauigkeit verbunden ist. Allerdings kann dies je nach Anwendungsfall akzeptabel sein und zumindest teilweise durch den sehr einfachen und kostengünstigen Aufbau des Säaggregats, das in diesem Fall nur sehr wenige Teile umfasst, wettgemacht werden.

Die Erfindung umfasst neben dem Verteilaggregat auch eine mehrreihige Verteilmaschine für körniges Gut wie Samenkörner, Dünger o. dgl., insbesondere eine Verteil- oder Sämaschine, die mehrere nebeneinander angeordnete, gleichartige Verteilaggregate gemäß einer der zuvor beschriebenen Ausführungsvarianten aufweist.

Es sei nochmals ergänzend an dieser Stelle erwähnt, dass die Innenmantelfläche, in der die Fördereinrichtung rotiert, nicht zwingend zylindrisch geformt sein muss, sondern auch einseitig konisch zulaufen kann. Die Förderelemente der rotierenden Fördereinrichtung können mit einer entsprechenden Schrägstellung so an eine solche konische Innenmantelfläche angepasst sein, dass ihr Abstand zur Wand gleichmäßig klein ist. Die spiralförmige Strukturierung der Innenmantelfläche kann ebenfalls an eine solche Formgebung angepasst sein oder je nach Ausführungsvariante auch fehlen kann, wobei die Steigung der Strukturierung über den sich konisch verjüngenden Innendurchmesser des Gehäuses konstant bleiben kann. Unabhängig von der Formgebung der Innenmantelfläche kann es sinnvoll sein, die Steigung oder Dimensionierung der Strukturierung an die typischerweise verwendeten Korngrößen und/oder an den Volumenstrom an geförderten Körnern anzupassen. Die Innenmantelfläche kann wahlweise auch zylindrisch sein und einen glatten, nicht strukturierten Innenmantel aufweisen, wobei eine Förderrichtung des Korngutes alleine durch den Luftstrom und/oder durch eine leichte Schrägstellung des Förderelementes (z.B. leichte Schneckenform) zu gewährleisten ist.

Im Folgenden werden nochmals die wichtigsten und einige ergänzende Aspekte der vorliegenden Erfindung wiederholt, wobei insbesondere die denkbaren Varianten der konkreten Gestaltung des erfindungsgemäßen Verteilaggragats mit ihren konstruktiven Details erläutert werden. Das mit der vorliegenden Erfindung definierte Verteilaggregat dient der möglichst gleichmäßigen und je nach Bedarf bzw. Konfiguration bzw. Betriebsmodus auch der vereinzelten Abgabe von körnigem Gut wie bspw. Samenkörnern, Dünger etc. Wenn somit im vorliegenden Zusammenhang von einem Verteilaggregat die Rede ist, so ist damit in aller Regel ein Säaggregat einer Verteil- oder Sämaschine gemeint. Bei einer solchen Sämaschine sind normalerweise mehrere gleichartige Säaggregate nebeneinander angeordnet, so dass eine mehrreihige Aussaat ermöglicht ist.

Alle von der Erfindung umfassten Bauvarianten des erfindungsgemäßen Verteilaggregats oder Säaggregats umfassen jeweils ein zylindrisches Gehäuse mit einer zylindrischen Innenmantelfläche und einer in das Gehäuse mündenden Einlassöffnung für eine Luftströmung mit von dieser transportiertem und in das Gehäuse befördertem körnigem Gut bzw. Samenkörner. Das zylindrische Gehäuse kann eine längliche Form aufweisen, so dass die Länge der Zylinderform größer ist als der Durchmesser des Gehäuses. Wahlweise jedoch kann das Gehäuse auch relativ kurz ausgeführt sein, so dass sein Durchmesser ggf. größer sein kann als seine Länge zwischen den Stirnseiten der Zylinderform. Unabhängig von der Länge des zylindrischen Gehäuses mündet die Einlassöffnung tangential an einer der beiden gegenüber liegenden Stirnseiten des durch das Gehäuse gebildeten Zylinders in das Gehäuse, so dass die Luftströmung ebenfalls tangential in das Gehäuseinnere eintreten kann. Normalerweise ist ein Anschlussstutzen o. dgl. vorgesehen, der die Einlassöffnung enthält und der außen am Gehäuse sitzt und tangential in dieses mündet. An der anderen Stirnseite des Gehäuses, welche der Stirnseite mit der Einlassöffnung gegenüber liegt, befindet sich eine Auslassöffnung des Verteil- oder Säaggregats, die wiederum tangential zur zylindrischen Innenmantelfläche des Gehäuses angeordnet ist, so dass die Einlassöffnung und die Auslass- oder Abgabeöffnung entweder parallel zueinander angeordnet sind oder dass zumindest ihre Mittelachsen in parallelen Ebenen liegen. Bei einer senkrecht von oben in das Gehäuse mündenden Einlassöffnung und einer senkrecht nach unten aus dem Gehäuse führenden Auslassöffnung sind deren Mittelachsen parallel zueinander angeordnet, was aber deshalb nicht zwingend gegeben sein muss, da es für die einwandfreie Funktion des Verteil- oder Säaggregats weder zwingend erforderlich ist, dass die Einlassöffnung senkrecht nach unten verläuft noch dass die Auslassöffnung senkrecht nach unten gerichtet ist. Beide Öffnungen können wahlweise auch in einem Winkel zur Vertikalen oder Horizontalen verlaufen. Unbedingt sinnvoll im Interesse einer einwandfreien Funktion der Gutvereinzelung oder Saatkornvereinzelung und/oder der gleichmäßigen Kornabgabe sind jeweils tangentiale Übergänge zwischen der zylindrischen Gehäuseinnenkontur und den Einlass- und Auslassöffnungen.

Weiterhin umfasst das erfindungsgemäße Sä- oder Verteilaggregat ein Hilfsmittel, das die Vergleichmäßigung des in der Luftströmung in das Gehäuseinnere eingetragenen Verteilguts oder der von der Luftströmung getragenen Samenkörner erleichtert oder verbessert. So befindet sich im Inneren des Gehäuses eine dort rotierend gelagerte Fördereinrichtung, die konzentrisch im Gehäuse bzw. konzentrisch zur zylindrischen Gehäuseinnenfläche rotieren kann. Die rotierende Fördereinrichtung dient nicht nur dem Transport des in der Luftströmung getragenen körnigen Gutes bzw. der von der Luftströmung transportierten Samenkörner, sondern auch der Vergleichmäßigung des Gut- oder Korntransports innerhalb des Gehäuses, da seine Rotation einerseits die Körner bremst, die zu schnell sind, andererseits aber auch solche Körner mitnimmt und beschleunigt, die innerhalb des Gehäuses stark abgebremst werden. Die in das Gehäuse durch die Einlassöffnung einströmende Luftströmung und die rotierende Fördereinrichtung fördern die Samenkörner zur Auslassöffnung, die annähernd tangential an die Innenmantelfläche des Gehäuses anschließt und die bspw. zu einer in den Boden führenden Saatleitung, einem Säschar o. dgl. führen bzw. dort münden kann. Die Fördereinrichtung kann mehrere an der Innenmantelfläche des Gehäuses entlang streichende paddelartige Förderelemente aufweisen, die gegenüber liegend an einer konzentrisch im Gehäuse rotierenden Welle befestigt sind. Wahlweise ist mindestens ein solches paddelartiges Förderelement vorhanden, das im Gehäuse rotiert, wobei kein schleifender Kontakt des Förderelements mit der Gehäuseinnenmantelfläche sinnvoll ist, sondern ein geringfügiger Abstand, der jedoch keine Körner passieren lassen sollte. Typischerweise sind zwei, drei oder vier solche paddelartigen Förderelemente an der Welle angeordnet, und zwar jeweils gleichmäßig voneinander beabstandet bzw. in gleichmäßiger Verteilung.

Der Begriff der paddelartigen Förderelemente drückt aus, wie die Gestaltung der Förderelemente sein kann. So ist die Fördereinrichtung normalerweise nicht durch geschlossene Schaufeln gebildet, welche in sternförmiger Anordnung die Förderelemente bilden, sondern weist vielmehr Förderelemente auf, die einen parallel oder leicht schräg zur Mittelachse der Fördereinrichtung angeordneten Schieberabschnitt aufweisen, der knapp bis an die Innenmantelfläche des zylindrischen Gehäuses reicht. Die Länge der Fördereinrichtung kann wahlweise so gestaltet sein, dass der Mündungsbereich des Lufteinlasses nicht oder nur teilweise überstrichen wird, so dass die Förderelemente randseitig von der entsprechenden Stirnseite des Gehäuses beabstandet ist. Eine solche Gestaltung kann die Verteilung der Körner im Gehäuseinnenraum verbessern. Auslassseitig können die Förderelemente ggf. die Auslassöffnung überstreichen, da dort die Körner äquidistant aus dem Gehäuse entlassen werden sollen, was durch eine gleichmäßig rotierende Fördereinrichtung und entsprechend gleichmäßig über den Auslass streichende Förderelemente erleichtert wird. Auf diese Weise sorgen die paddelartigen Förderelemente der Fördereinrichtung für eine Verteilung und Vergleichmäßigung des Gutstroms an Körnern, die zwar in Nähe der Einlassöffnung zunächst zu Zusammenballungen neigen können, jedoch durch die rotierende Bewegung der Förderelemente im Idealfall in einer Weise an diesen aufgereiht werden, dass die Körner einzeln und in gleichbleibenden Abständen und in konstanter Abgaberichtung durch die Auslassöffnung abgegeben werden, wodurch das Ziel der vorliegenden Erfindung - die Vergleichmäßigung eines Gutstromes zur vereinzelten Abgabe von Körnern -weitestgehend erfüllt werden kann.

Die innerhalb des Gehäuses rotierende Fördereinrichtung kann wahlweise mit Hilfe des durch die Einlassöffnung in das Gehäuse des Verteilaggregats eintretenden Luftstroms in Rotation versetzt werden, also über einen passiven Antrieb verfügen. Es ist jedoch auch möglich, die Fördereinrichtung durch einen externen Antrieb rotieren zu lassen, wahlweise in steuerbarer Umdrehungsgeschwindigkeit. Hierfür kann sich bspw. ein elektromotorischer Antrieb eignen, der außen am Gehäuse des Verteilaggregats angeordnet sein kann. Auch hydrostatische Antriebe oder Riemenantriebe mit zentralem Antriebsmotor sind denkbar.

Eine weitere sinnvolle Option der vorliegenden Erfindung kann darin bestehen, die Innenmantelfläche des Gehäuses mit einer Strukturierung in Gestalt einer durchgängigen Spirale auszustatten. Eine solche spiralförmige Strukturierung kann bspw. von einer ersten Stirnseite, an welcher der Anschlussstutzen mit der Einlassöffnung angeordnet ist, zur gegenüber liegenden Stirnseite, an welcher sich die Auslassöffnung befindet, reichen. Zudem ist diese optionale spiralartige Strukturierung in Umdrehungsrichtung der Fördereinrichtung in Richtung zur Auslassöffnung gerichtet und mündet dort. Die spiralartige Strukturierung kann somit in Umdrehungsrichtung der Fördereinrichtung im Bereich der Einlassöffnung beginnen und verbindet auf diese Weise die Einlassöffnung mit der Auslassöffnung, so dass die vom Luftstrom getragenen Körner die Einlassöffnung durch den Anschlussstutzen passieren, von den paddelartigen Förderelementen der rotierenden Fördereinrichtung in Verbindung mit der spiralartigen Strukturierung der Wände geordnet und vergleichmäßigt werden und schließlich die Auslassöffnung als weitgehend gleichmäßigen und idealerweise vereinzelten Gutstrom an Samenkörnern verlassen. Die erwähnte spiralartige Strukturierung kann ggf. unterschiedliche Steigungsabschnitte aufweisen und in eine Verzögerungs- und Vereinzelungswindung unterteilt sein. Hierbei befindet sich das mit geringerer Gewindesteigung ausgestattete Verzögerungsgewinde nahe beim Einlass und bei der ersten Stirnseite, während das sich daran anschließende Vereinzelungsgewinde in Richtung zum Auslass und zur zweiten Stirnseite eine größere Steigung aufweisen kann, so dass die einzelnen Gewindegänge ungefähr eine Breite aufweisen, die dem Durchmesser der zu vereinzelnden Körner entspricht, so dass diese in den Gewindegängen geführt werden. Auch andere Gestaltungen sind denkbar, bspw. eine Strukturierung, die in einer definierten Entfernung von der Einlassstirnseite des Gehäuses beginnt und/oder nicht ganz bis zur gegenüber liegenden Stirnseite reicht und/oder variable Furchentiefen aufweist etc.

Mit der oben erläuterten Gestaltung können die gleichmäßig rotierenden paddelartigen Förderelemente der Fördereinrichtung im Zusammenhang mit der durch das Gehäuse verlaufenden gleichmäßigen Luftströmung und ggf. der optional zu verstehenden spiralförmigen Strukturierung der Innenmantelfläche des Gehäuses eine Vergleichmäßigung des Gutstroms (an Körnern, Saatkörnern etc.) bewirken, die im Idealfall zu einer äquidistanten Abgabe der Körner bzw. des körnigen Guts am Auslass führt. Auf diese Weise liefert das erfindungsgemäße Sä- oder Verteilaggregat eine gleichmäßige Kornvereinzelung hoher Qualität, sofern in der Luftströmung nicht zu viele Körner transportiert werden bzw. eine zu hohe Drehzahl an der rotierenden Welle anliegt.

Im Bereich bzw. in Nähe der Einlassöffnung kann die Kornförderung bzw. der Korntransport ggf. noch teilweise ungeordnet, so dass noch nicht eine optimale Verteilung aller Körner an den jeweiligen Förderelementen erreicht wurde. Einige der Körner werden typischerweise noch unkontrolliert im Gehäuse herumgewirbelt, wobei sie sich aufgrund der nach dem Passieren der Einlassöffnung wirkenden Zentrifugalkräfte normalerweise allesamt an der Innenmantelfläche befinden und dort eine kreisförmige oder spiralförmige Bewegung in Umdrehungsrichtung der Welle ausführen. Nach mehrfachen Kreisbewegungen und Annäherung an die Auslassöffnung befinden sich normalerweise keine Körner mehr im Gehäuse, die nicht von den Förderelementen bewegt werden und dort anliegen, so dass sie in idealer tangentialer Bewegung als vereinzelter Gutstrom durch die Auslassöffnung nach unten (bzw. je nach Richtung der Auslassöffnung schräg oder horizontal) aus dem Gehäuse abgegeben werden.

Die vereinzelte Aufreihung der Körner an den Förderelementen in Nähe der Auslassöffnung sorgt normalerweise dafür, dass bei jedem Passieren des in Richtung der zweiten Stirnseite zeigenden Endabschnitts jedes Förderelements nur genau ein Korn auf eine tangential von der Innenmantelfläche wegführende Rampe zum Auslass abgeleitet wird. Diese Rampe kann wahlweise einen geradlinigen Verlauf aufweisen und für eine tangentiale Kornbewegung durch die Auslassöffnung sorgen. Die Rampe kann prinzipiell jedoch auch anders geformt sein und bspw. einen in Richtung zur Mittelachse des Gehäuses gekrümmten Verlauf aufweisen, der die Körner nach der tangentialen Ablösebewegung in eine axiale Bewegung umlenken kann, die bspw. parallel zur Längserstreckungsrichtung des Gehäuses verläuft. Grundsätzlich kann den Körnern auf diese Weise eine nahezu beliebige Richtung aufgeprägt werden, in der sie das Gehäuse verlassen können.

Sollte die Drehzahl der Fördereinrichtung für die Menge an befördertem Gut bzw. einströmender Luft nicht mehr ausreichen oder sollte die Fördereinrichtung bei einem auftretenden Störungsfall zum Stillstand kommen, sorgt die Gestaltung der paddelartigen Förderelemente für einen ausreichenden frei bleibenden Querschnitt im Gehäuseinneren zwischen der Einlassöffnung und der Auslassöffnung, so dass ggf. ein Teil der beförderten Körner an den Förderelementen vorbei zwischen der zentralen Welle und dem Freiraum zwischen der Welle und den daran angeordneten Förderelementen geführt werden kann, wodurch die Körner das Gehäuse durch den Auslass verlassen können. Um dies zu gewährleisten und damit die Betriebssicherheit aufrecht erhalten zu können und damit die Verstopfungsgefahr zu reduzieren, erstrecken sich die Längsseiten der paddelartigen Förderelemente ungefähr parallel zur Längserstreckungsrichtung des Gehäuses und der Welle und weisen dabei eine Breite auf, die sich über mehrere Spuren oder Rillen der spiralförmigen Strukturierung erstreckt. Normalerweise sind die sich radial im Gehäuse erstreckenden Schmalseiten der Förderelemente deutlich kürzer als die Längsseiten und messen im gezeigten Ausführungsbeispiel weniger als ein Drittel des Innendurchmessers des Gehäuses.

Gemäß einer abweichenden Ausführungsvariante des Verteilaggregats bzw. des Säaggregats können die Förderelemente der rotierenden Fördereinrichtung einen leicht wendelförmigen Verlauf in paralleler Richtung zur Welle aufweisen, wodurch der axiale Vorschub der Körner in Richtung zum Gehäuseauslass gegeben ist bzw. gezielt unterstützt wird. Hierbei sind die Oberflächen der paddelartigen Förderelemente in Richtung zu ihren Längsseiten in einer Weise gekrümmt, dass sich eine wendelförmige Kontur ergibt, bei der ein spitzer Winkel zwischen der Längserstreckungsrichtung des Gehäuses und der Oberfläche der Förderelemente gebildet ist. Bei einer solchen Variante kann ggf. auf die gewindeartige Strukturierung der Innenmantelfläche verzichtet werden, da die wendelartige Kontur der Förderelemente für den axialen Kornvorschub sorgt. Dabei bildet eine radial nach innen vorstehende Kante über die Innenmantelfläche eine axiale Vorschubsbegrenzung bzw. Führung, so dass nur das jeweils erste aufgereihte Korn den Dosierer verlässt. Der leichte axiale Vorschub kann ebenfalls durch die Luftströmung, und oder dem ständigen Zuführen von Körnern und die daraus resultierenden leichten Eigenverdrängung erfolgen. Selbstverständlich sind auch Kombinationen aus wendelförmigen Förderelementen und gewindeartiger Strukturierung unterschiedlicher Gestalt und Tiefe möglich und sinnvoll.

Auch hinsichtlich der Größe, Formgebung und gesamten Dimensionierung der einzelnen Förderelemente sind verschiedene Varianten möglich. Je nach Gestaltung, Größe und Kontur können sich die Förderelemente bspw. besonders gut für die Kornvereinzelung bei Weizen eignen, während anders gestaltete Förderelemente für Raps eingesetzt werden können. Wiederum andere, weiteren Varianten können sich bspw. für Soja oder ähnlich geformte Körner eignen. Wahlweise können einzelne Varianten der Förderelemente jeweils mit Gegengewichten versehen sein, so dass ggf. auf Federelemente im Bereich der Schwenklagerung der Förderelemente an der Welle verzichtet werden kann. Die angeformten Gegengewichte können vielmehr für die radiale Ausrichtung der Förderelemente bei schneller Drehung der Welle sorgen, während die Förderelemente bei einer auftretenden Verstopfung oder einem Widerstand problemlos ausweichen, nachgeben und/oder gegen die Vorschubrichtung umklappen können. Je nach Ausführungsvariante kann die rotierende Fördereinrichtung bspw. zwei gegenüber liegend angeordnete Förderelemente aufweisen, die über eine geeignete Befestigung an der Welle verankert sind, insbesondere mit einem federunterstützten oder durch Gegengewicht in ihrer Normallage gehaltenen Schwenklagerung. Es sind jedoch gleichermaßen Varianten möglich, bei denen nur ein Förderelement rotiert oder bei denen drei, vier oder mehr gleichartig oder unterschiedlich geformte paddelartige Förderelemente vorgesehen sind, die jeweils gleichmäßig voneinander beabstandet an der zentralen Welle angeordnet und schwenkbar gelagert sind. So ist bspw. eine Variante mit vier im Winkel von jeweils 90° zueinander stehenden Förderelementen möglich, die gleichmäßig verteilt an der Welle angeordnet sind.

Die erwähnte Variante mit nur einem Förderelement, das unterschiedlich ausgestaltet sein kann, kann bspw. für die Vereinzelung von Raps eingesetzt werden. Ein solches einzelnes Förderelement kann darüber hinaus mit halbkreisförmigen Scheiben zusammenwirken, die ein direktes Durchströmen der kleinen Rapskörner im Gehäuse verhindern. Die sehr kleinen Rapskörner werden somit an den als Prallscheiben ausgebildeten Scheiben verzögert und daran gehindert, unkontrolliert zum Ausgang zu drängen. So kann eine der halbkreisförmigen und mit der Welle rotierenden Scheiben zwischen der axial in die erste Stirnseite des Gehäuses mündenden Einlassöffnung und dem beabstandet von der Stirnseite rotierenden Förderelement angeordnet sein, während eine zweite Scheibe in Nähe der in der zweiten Stirnseite befindlichen Auslassöffnung angeordnet sein kann. Während die erste Scheibe im gezeigten Ausführungsbeispiel ein Kreissegment von ca. 180° abdeckt, kann die zweite Scheibe ein Kreissegment von bspw. 270° abdecken, so dass die im Gehäuse befindlichen Rapskörner effektiv daran gehindert werden, vorzeitig den Auslass zu erreichen, bevor sie dort in vereinzelter Form abgegeben werden.

Um Blockaden zu vermeiden, können die paddelartigen Förderelemente jeweils federnd an der zentralen Welle aufgehängt sein, so dass sie bei erhöhtem Widerstand ausweichen können. Die entsprechenden Schwenkmechanismen lassen vorzugweise jeweils eine Schwenkbewegung der Förderelemente um einen definierten Schwenkwinkel zu, sobald sie durch zu viele Körner, durch Fremdstoffe wie Steine, Holz o. dgl. blockiert werden. Auf diese Weise werden Beschädigungen verhindert. Wie oben erwähnt, können anstelle der federnden Aufhängung an der Welle auch Gegengewichte für die ungefähr radiale Ausrichtung der Förderelemente und für deren bedarfsweise Ausweichbewegungen sorgen.

Die paddelartige Oberfläche jedes Förderelementes kann darüber hinaus eine optional zu verstehende Konturierung aufweisen, bspw. einen Knick oder eine konkave Wölbung. Eine solche Konturierung kann einen vorteilhaften Einfluss auf die Kornförderung haben. Zudem ist es sinnvoll, wenn die paddelartigen Förderelemente jeweils in möglichst geringen Abständen zur Innenmantelfläche des Gehäuses rotieren. Diese Abstände sollten kleiner sein als die Hälfte des kleinsten Korndurchmessers des auszubringenden Verteilgutes, so dass kein Verklemmen der Körner zwischen den Förderelementen und der Innenmantelfläche des Gehäuses droht. Außerdem sollten die paddelartigen Förderelemente im Interesse einer hohen Verteil- und Vereinzelungsqualität in ihrer Breite über einen Teil der Auslassöffnung reichen, so dass diese bei rotierender Fördereinrichtung von den Förderelementen überstrichen und das gleichmäßig verteilte Gut nahezu tangential ausgeschleudert wird. Durch Einströmung einer gleichmäßigen, nicht pulsierenden Luftströmung mit ungefähr konstantem Volumenstrom an Luft und an mitgenommenen Körnern in das Gehäuseinnere mit der darin rotierenden Fördereinrichtung wird ein funktionierendes Einzelkornsäaggregat zur Verfügung gestellt, bei dem die Körner vereinzelt und in gleichmäßigen Abständen voneinander durch die Auslassöffnung abgegeben werden.

Wie oben erwähnt, kann die zentrale Welle der Fördereinrichtung bspw. elektromotorisch angetrieben sein, was einem aktiven Antrieb der Fördereinrichtung entspricht. Wahlweise kann die zentrale Welle der Fördereinrichtung bzw. die drehbaren Förderelemente auch über die durch die Einlassöffnung ins Gehäuse geleitete Luftströmung angetrieben sein, was einem passiven Antrieb entspricht.

Bei einer weiteren alternativen Ausführungsvariante des Verteilaggregats kann ggf. auf eine zentrale Welle verzichtet werden. Stattdessen können bei dieser Variante die Körner durch einen rotierenden Gehäuseabschnitt mit Quersteg und einer feststehenden Windung durch das Gehäuse in axialer Richtung zum Kornausgang bzw. zur Auslassöffnung befördert werden. Die gegenüber dem rotierenden Gehäuseabschnitt und dem Quersteg fest stehende Spirale mit Windungen konstanter Steigung, die in einem Abstand zur drehbaren Innenmantelfläche des rotierenden Gehäuseabschnittes angeordnet ist, schiebt die Körner axial zum Kornausgang. Die Windungen sind fest mit dem feststehenden Gehäuseteil und/oder mit dem feststehenden Kornausgang verbunden. Bei dieser Variante werden die Körner durch die rotationsbedingten Zentrifugalkräfte nach außen an die Innenmantelfläche des rotierenden Gehäuseabschnittes gedrängt. Der rotierende Quersteg sorgt für die Vorschubbewegung der Körner in Rotationsrichtung entlang des Gehäuseumfangs, während die ortsfesten Windungen der nicht rotierenden Spirale für einen axialen Vorschub in Richtung vom Einlass zum Auslass sorgen. Um dies zu erreichen, muss der Abstand der Spiralwindungen von der Innenmantelfläche des rotierenden Gehäuseabschnittes zumindest geringfügig geringer sein als der kleinste Korndurchmesser, während die Gewindesteigung der Windungen je nach Bedarf ausgestaltet sein kann. Die Steigung kann sich nach der Korngröße, dem gewünschten Vorschub im Zusammenhang mit der Umdrehungsgeschwindigkeit des Quersteges sowie weiterer Säparameter richten.

Es muss an dieser Stelle nicht gesondert erwähnt werden, dass bei allen oben beschriebenen Varianten die beiden Stirnseiten des Gehäuses normalerweise geschlossen sind. Wahlweise kann es darüber hinaus sinnvoll sein, das Gehäuse modular aufzubauen und aus mehreren Segmenten zusammenzusetzen, die als Ringe ausgebildet sind und eine unterschiedliche Gehäuselänge ermöglichen. Je nach "Fließverhalten" der Körner in der spiralförmigen Luftströmung kann ein kürzeres oder längeres Gehäuse günstiger für die Exaktheit der Kornvereinzelung sein. Werden mehrere Ringe aneinander gefügt, kann die Gehäuselänge durch die Anzahl der verbauten Ringe in gewünschter Weise variiert werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsvariante eines erfindungsgemäßen Verteilaggregats.
Fig. 2 zeigt eine weitere Perspektivansicht der in Fig. 1 gezeigten Variante des Verteilaggregats von schräg unten.
Fig. 3 zeigt eine schematische Perspektivansicht des Verteilaggregats mit teilweise geöffnetem Gehäuse und darin rotierender Fördereinrichtung.
Fig. 4, Fig. 5 und Fig. 6 zeigen jeweils perspektivische Teillängsschnitte des Verteilaggregats gemäß Fig. 1.
Fig. 7 zeigt einen schematischen Längsschnitt durch das Verteilaggregat und durch die zentrale Welle der rotierenden Fördereinrichtung.
Fig. 8 zeigt einen weiteren perspektivischen Teillängsschnitt des Verteilaggregats.
Fig. 9 zeigt eine Draufsicht auf eine Stirnseite des Verteilaggregats mit teilweise geöffneter Gehäusestirnseite.
Fig. 10 zeigt eine weitere Draufsicht auf die gegenüber liegende Stirnseite des Verteilaggregats mit geöffnetem Gehäuse.
Fig. 11 zeigt eine perspektivische Ansicht des einseitig offenen Gehäuses zur Verdeutlichung des Korntransports bei der Ablösung der Körner vom Gehäuse.
Fig. 12 zeigt den Korntransport gemäß Fig. 11 in einer Draufsicht.
Fig. 13 zeigt die tangentiale Ablösung der einzelnen Körner vom Gehäuse in perspektivischer Darstellung.
Fig. 14 zeigt eine alternative Ausführungsvariante des Gehäuses mit gekrümmter Führungsbahn an der Auslassöffnung zur Umlenkung der Körner.
Fig. 15, Fig. 16 und Fig. 17 zeigen jeweils perspektivische Teilschnittansichten einer weiteren Ausführungsvariante des Verteilaggregats mit angewinkelten Förderelementen zur Kornförderung.
Fig. 18a zeigt fünf verschiedene Ausführungsvarianten der Förderelemente in Draufsicht (oben) und in perspektivischer Darstellung (darunter).
Fig. 18b zeigt weitere vier verschiedene Ausführungsvarianten der Förderelemente in Draufsicht (oben) und in perspektivischer Darstellung (darunter).
Fig. 19 zeigt eine Draufsicht einer Ausführungsvariante des Verteilaggregats mit vier konzentrisch an einer zentralen Welle angeordneten Förderelementen.
Fig. 20 bis Fig. 25 zeigen in verschiedenen perspektivischen Ansichten weitere Varianten des Verteilaggregats.

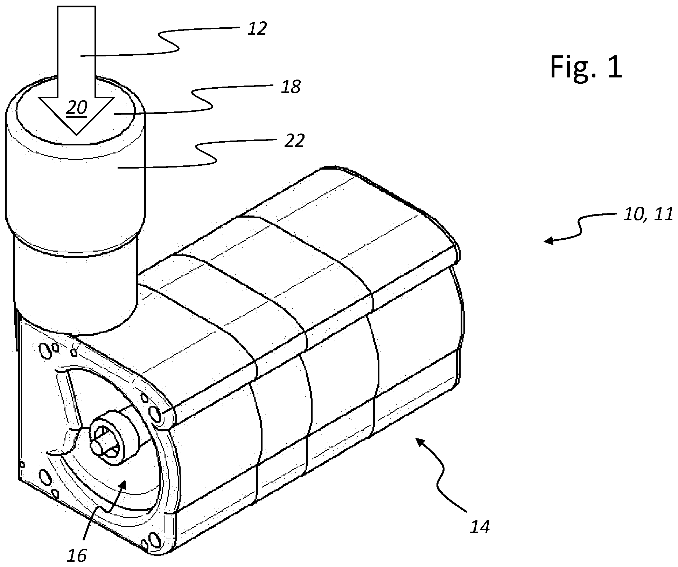

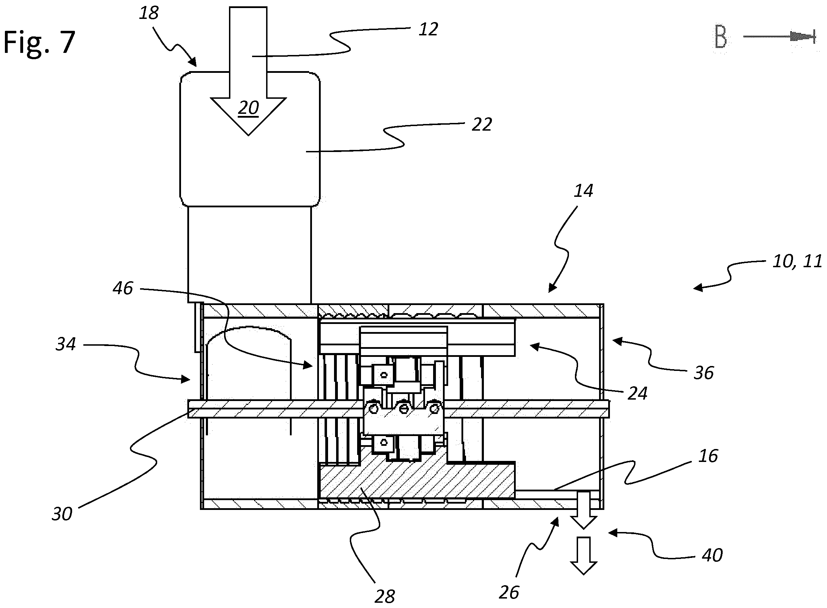

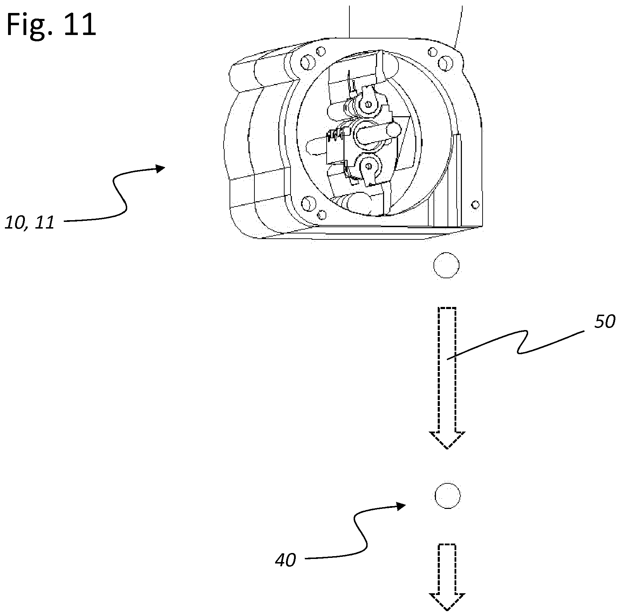

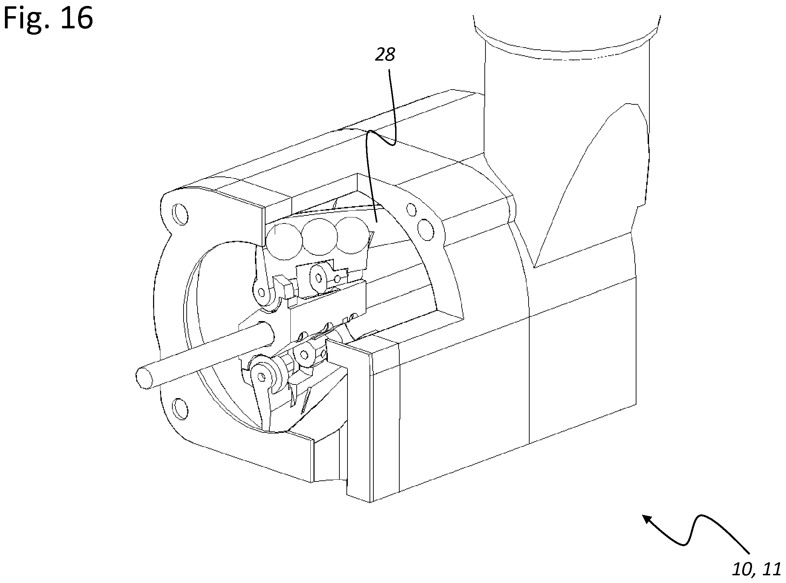

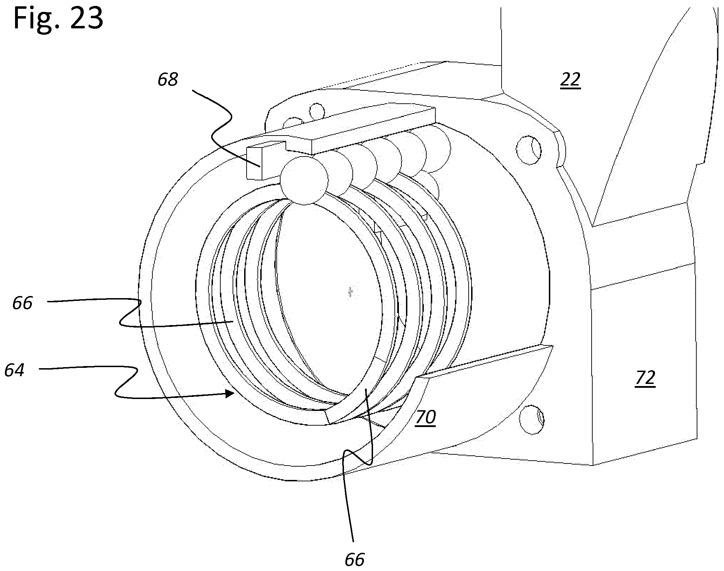

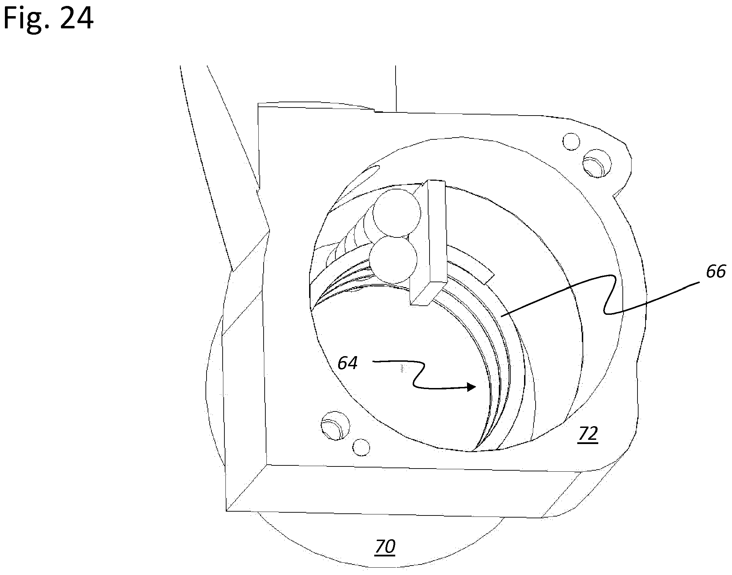

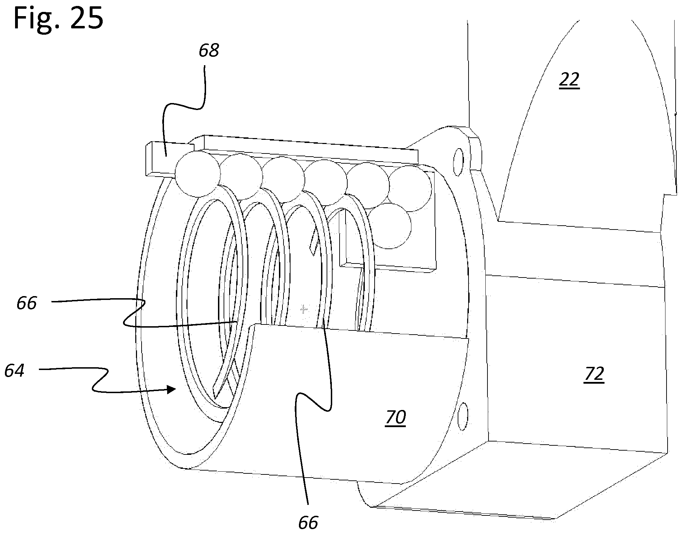

Für gleiche oder gleich wirkende Elemente der Erfindung werden in den Figuren 1 bis 25 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

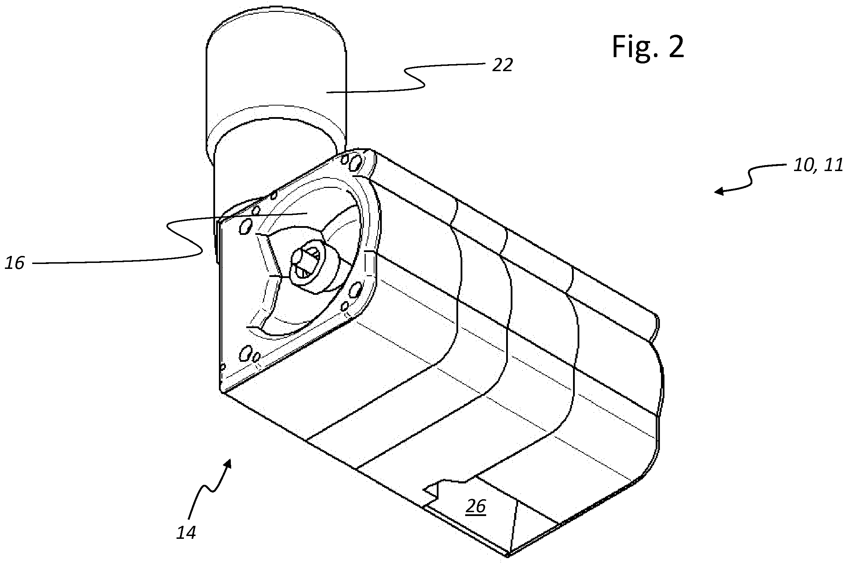

Die schematischen Darstellungen der Figuren 1 und 2 zeigen jeweils perspektivische Ansichten einer ersten Ausführungsvariante eines erfindungsgemäßen Verteilaggregates 10, der zur möglichst gleichmäßigen, idealerweise zur vereinzelten Abgabe von körnigem Gut, insbesondere von Samenkörnern 12, Dünger etc. vorgesehen ist. Das Verteilaggregat 10 kann somit im gezeigten Ausführungsbeispiel ein Säaggregat 11 einer Verteil- oder Sämaschine (nicht dargestellt) sein, bei der normalerweise mehrere solcher Säaggregate 11 zur mehrreihigen Aussaat nebeneinander angeordnet sind. Das Verteilaggregat 10 oder Säaggregat 11 umfasst ein längliches Gehäuse 14 mit einer zylindrischen Innenmantelfläche 16 und einer in das Gehäuse 14 mündenden Einlassöffnung 18 für eine Luftströmung 20 mit von dieser transportiertem und in das Gehäuse 14 befördertem körnigem Gut bzw. Samenkörner 12. Die Einlassöffnung 18 ist Teil eines Anschlussstutzens 22, der außen am Gehäuse 14 sitzt und tangential in dieses mündet.

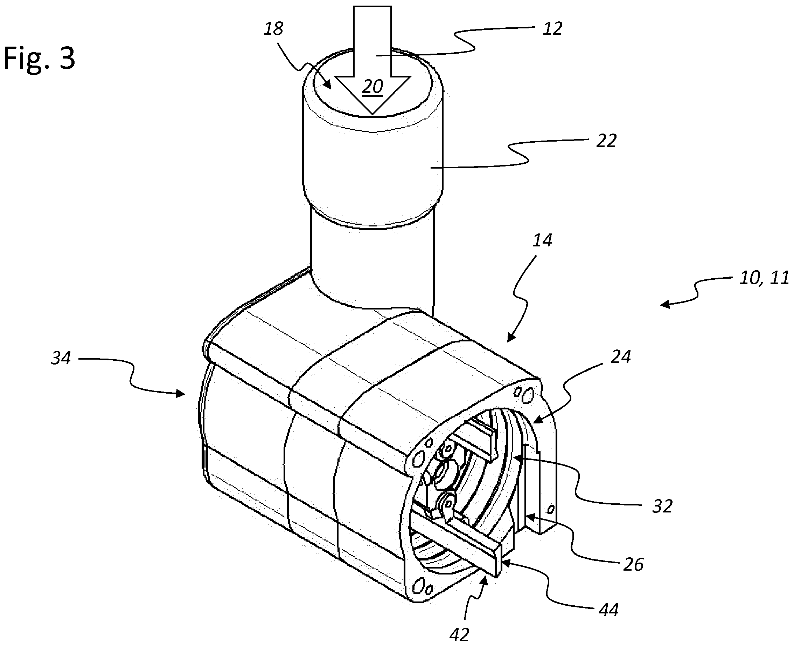

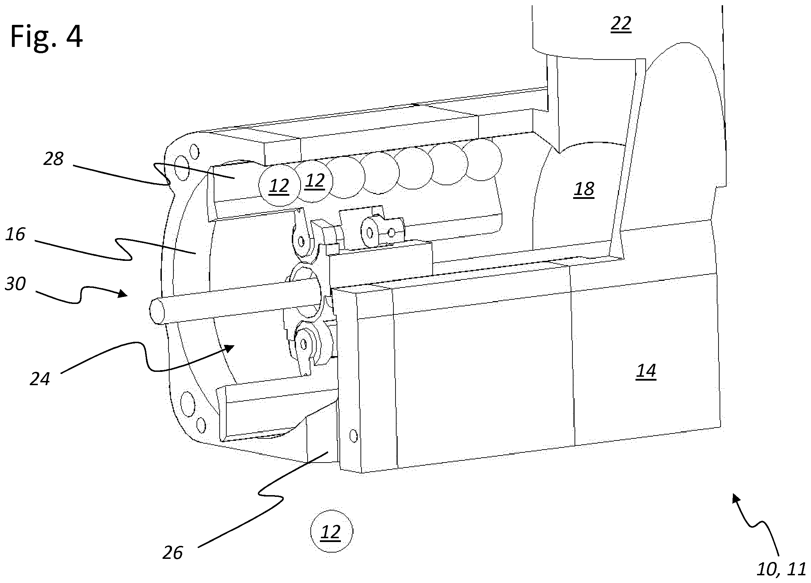

Wie die Fig. 3 ff. erkennen lassen, befindet sich im Inneren des Gehäuses 14 eine dort gelagerte Fördereinrichtung 24, die dort konzentrisch rotieren kann und dem Transport des in der Luftströmung 20 getragenen körnigen Gutes bzw. der von dieser transportierten Samenkörner 12 dient. Die Luftströmung 20 und die rotierende Fördereinrichtung 24 fördern die Samenkörner 12 zu einer Auslassöffnung 26, die annähernd tangential an die Innenmantelfläche 16 anschließt, wie dies bspw. die Fig. 4 ff verdeutlichen. Die Fördereinrichtung 24 weist im gezeigten Ausführungsbeispiel zwei an der Innenmantelfläche 16 entlang streichende paddelartige Förderelemente 28 auf, die gegenüber liegend an einer konzentrisch im Gehäuse 14 rotierenden Welle 30 befestigt sind.

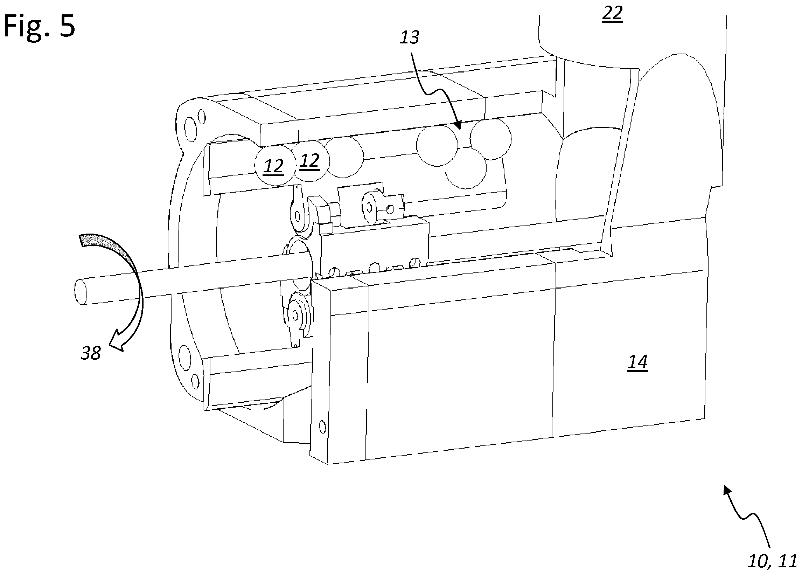

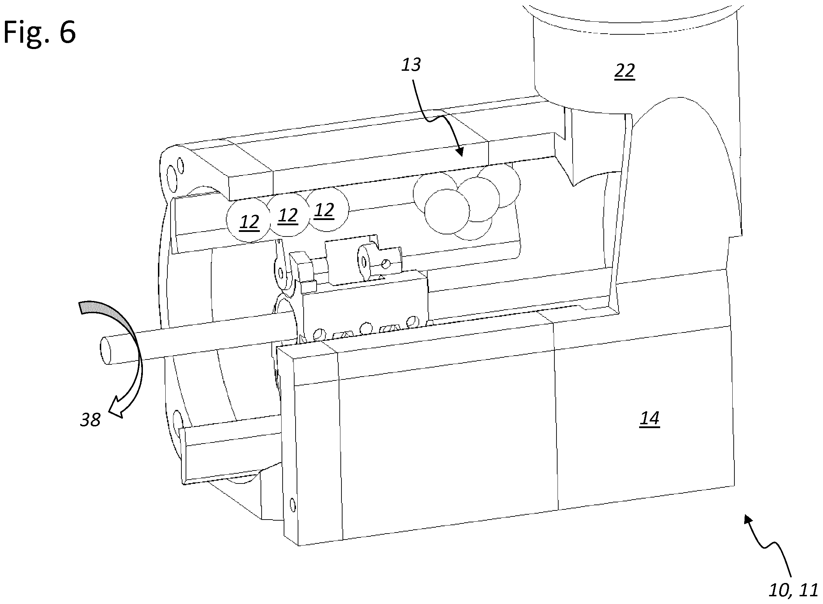

Wie dies die Figuren 4 bis 6 erkennen lassen, sorgen die paddelartigen Förderelemente 28 der Fördereinrichtung 24 für eine Verteilung und Vergleichmäßigung des Gutstroms an Körnern 12, die zwar in Nähe der Einlassöffnung 18 zunächst zu Zusammenballungen 13 neigen können (Fig. 5, Fig. 6), jedoch durch die rotierende Bewegung der Förderelemente 28 im Idealfall in einer Weise an diesen aufgereiht werden, so dass die Körner 12 einzeln und in gleichbleibenden Abständen und in konstanter Abgaberichtung durch die Auslassöffnung 26 abgegeben werden (Fig. 4), wodurch das Ziel der vorliegenden Erfindung - die Vergleichmäßigung eines Gutstromes zur vereinzelten Abgabe von Körnern -weitestgehend erfüllt werden kann.

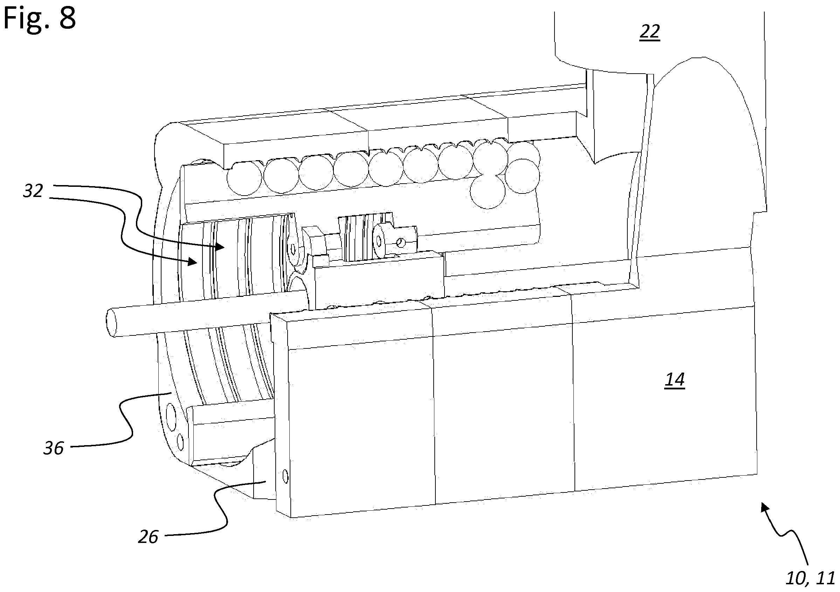

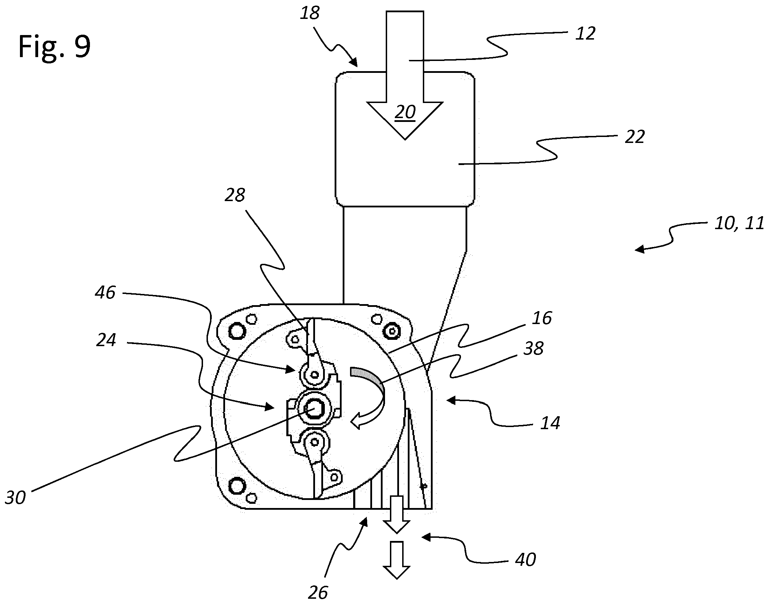

Die perspektivische Darstellung der Fig. 8 lässt zudem eine weitere Option der vorliegenden Erfindung erkennen. So kann die die Innenmantelfläche 16 des Gehäuses 14 eine Strukturierung 32 in Gestalt einer durchgängigen Spirale aufweisen, wie dies in Fig. 3 und in Fig. 8 erkennbar ist. Die spiralförmige Strukturierung 32 reicht von einer ersten Stirnseite 34, an welcher der Anschlussstutzen 22 angeordnet ist, zur gegenüber liegenden Stirnseite 36, an welcher sich die Auslassöffnung 26 befindet. Zudem ist die spiralartige Strukturierung 32 in Umdrehungsrichtung 38 der Fördereinrichtung 24 in Richtung zur Auslassöffnung 26 gerichtet und mündet dort. Die spiralartige Strukturierung 32 beginnt in Umdrehungsrichtung 38 der Fördereinrichtung 24 (vgl. Fig. 9) im Bereich der Einlassöffnung 18 und verbindet auf diese Weise die Einlassöffnung 18 mit der Auslassöffnung 26, so dass die vom Luftstrom 20 getragenen Körner 12 die Einlassöffnung 18 durch den Anschlussstutzen 22 passieren, von den paddelartigen Förderelementen 28 der Fördereinrichtung 24 in Verbindung mit der spiralartigen Strukturierung 32 der Wände geordnet und vergleichmäßigt werden und schließlich die Auslassöffnung 26 als weitgehend gleichmäßigen und idealerweise vereinzelten Gutstrom 40 an Samenkörnern 12 verlassen. Die erwähnte spiralartige Strukturierung 32 kann ggf. unterschiedliche Steigungsabschnitte aufweisen und in eine Verzögerungs- und Vereinzelungswindung unterteilt sein. Hierbei befindet sich das mit geringerer Gewindesteigung ausgestattete Verzögerungsgewinde nahe beim Einlass 18 und bei der ersten Stirnseite 34, während das sich daran anschließende Vereinzelungsgewinde in Richtung zum Auslass 26 und zur zweiten Stirnseite 36 eine größere Steigung aufweist, so dass die einzelnen Gewindegänge ungefähr eine Breite aufweisen, die dem Durchmesser der Körner 12 entspricht, so dass diese in den Gewindegängen geführt werden.

Insbesondere die Figuren 9 bis 13 lassen erkennen, wie die gleichmäßig rotierenden paddelartigen Förderelemente 28 der Fördereinrichtung 24 im Zusammenhang mit der durch das Gehäuse 14 verlaufenden gleichmäßigen Luftströmung 20 und ggf. der (optional zu verstehenden) spiralförmigen Strukturierung 32 der Innenmantelfläche 16 des Gehäuses 14 eine Vergleichmäßigung des Gutstroms 40 (an Körnern, Saatkörnern 12 etc.) bewirken können, die im Idealfall zu einer äquidistanten Abgabe am Auslass 26 führt. Auf diese Weise liefert das erfindungsgemäße Säaggregat eine gleichmäßige Kornvereinzelung hoher Qualität, sofern in der Luftströmung 20 nicht zu viele Körner 12 transportiert werden bzw. eine zu hohe Drehzahl an der rotierenden Welle 30 anliegt.

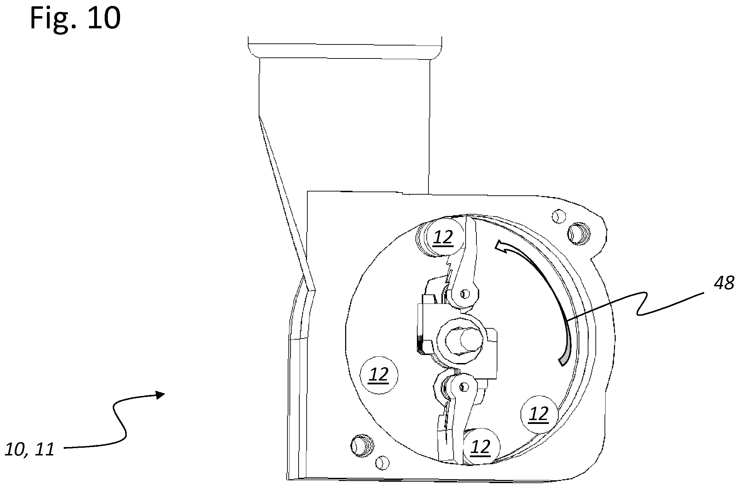

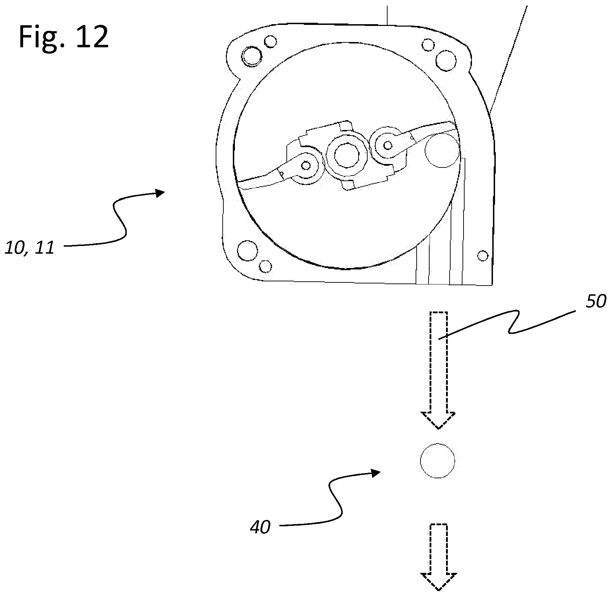

Die Darstellung der Fig. 10 lässt die Förderung der Körner 12 in Nähe der Einlassöffnung 18 erkennen, die noch teilweise ungeordnet ist und noch nicht zur einer optimalen Verteilung aller Körner an den jeweiligen Förderelementen 28 geführt hat. Einige der Körner 12 werden noch unkontrolliert im Gehäuse 14 herumgewirbelt, wobei sie sich aufgrund der nach dem Passieren der Einlassöffnung 18 wirkenden Zentrifugalkräfte normalerweise allesamt an der Innenmantelfläche 16 befinden und dort eine kreisförmige oder spiralförmige Bewegung 48 in Umdrehungsrichtung 38 der Welle 30 ausführen. Nach mehrfachen Kreisbewegungen 48 und Annäherung an die Auslassöffnung 26 befinden sich normalerweise keine Körner 12 mehr im Gehäuse 14, die nicht von den Förderelementen 28 bewegt werden und dort anliegen (Fig. 12), so dass sie in idealer tangentialer Bewegung 50 als vereinzelter Gutstrom 40 durch die Auslassöffnung 26 nach unten aus dem Gehäuse 14 abgegeben werden (Fig. 12, Fig. 13, Fig. 14).

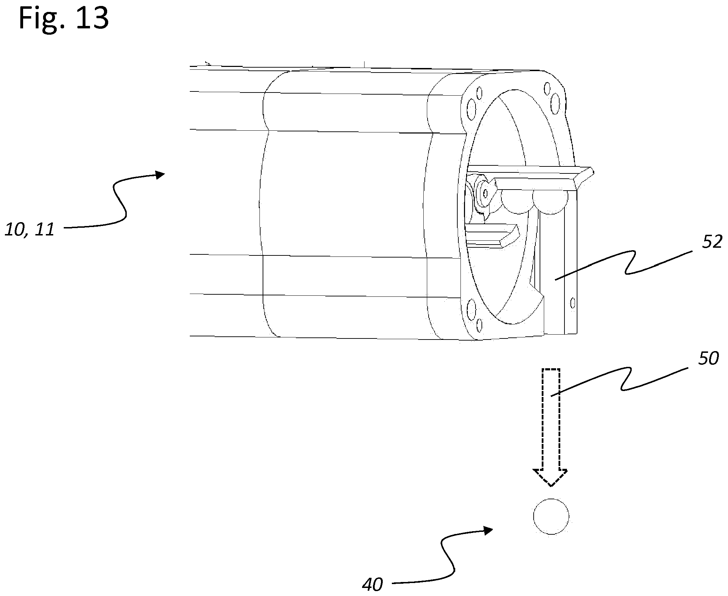

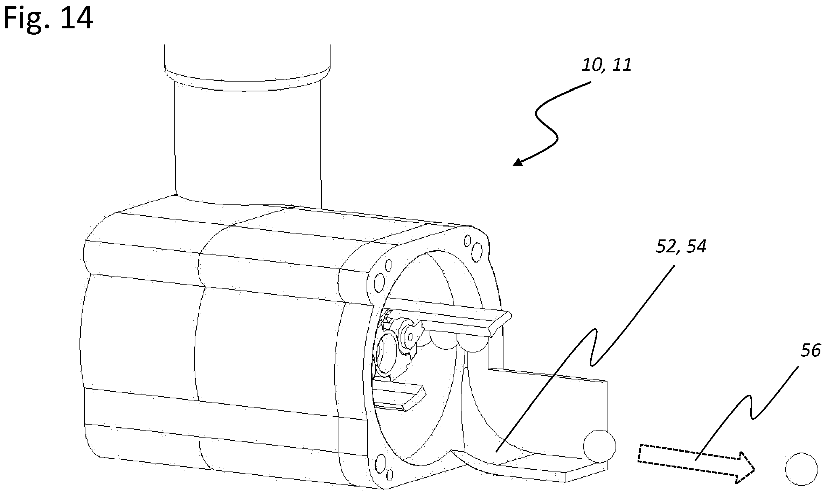

Die vereinzelte Aufreihung der Körner 12 an den Förderelementen 28 in Nähe der Auslassöffnung 26 sorgt normalerweise dafür, dass bei jedem Passieren des in Richtung der zweiten Stirnseite 36 zeigenden Endabschnitts jedes Förderelements 28 nur genau ein Korn 12 auf eine tangential von der Innenmantelfläche 16 wegführende Rampe 52 zum Auslass 26 abgeleitet wird (Fig. 13). Diese Rampe 52 kann wahlweise die in Fig. 13 gezeigte Kontur aufweisen und für eine tangentiale Kornbewegung 50 durch die Auslassöffnung 26 sorgen. Die Rampe 52 kann prinzipiell jedoch auch anders geformt sein und bspw. den in Fig. 14 gezeigten gekrümmten Verlauf 54 aufweisen, der die Körner 12 nach der tangentialen Ablösebewegung 50 in eine axiale Bewegung 56 umlenkt, die parallel zur Längserstreckungsrichtung des Gehäuses 14 verläuft.

Sollte es der Fall sein, dass die Drehzahl der Fördereinrichtung 24 nicht mehr ausreicht bzw. in einem Störungsfall das Drehen der Förderelemente 28 zum Stillstand kommt, sorgt die Gestaltung der paddelartigen Förderelemente 28 für einen ausreichenden frei bleibenden Querschnitt im Gehäuseinneren zwischen der Einlassöffnung 18 und der Auslassöffnung 26, so dass ggf. ein Teil der beförderten Körner 12 an den Förderelementen 28 vorbei zwischen der zentralen Welle 30 und dem Freiraum zwischen der Welle 30 und den daran angeordneten Förderelementen 28 geführt werden und das Gehäuse 14 durch den Auslass 26 verlassen können. Um dies zu gewährleisten und damit die Betriebssicherheit aufrecht erhalten zu können und damit die Verstopfungsgefahr zu reduzieren, erstrecken sich die Längsseiten 42 der paddelartigen Förderelemente 28 parallel zur Längserstreckungsrichtung des Gehäuses 14 und der Welle 30 und weisen dabei eine Breite auf, die sich über mehrere Spuren oder Rillen der spiralförmigen Strukturierung 32 erstreckt. Wie die Figuren 1 bis 14 erkennen lassen, sind die sich radial im Gehäuse 14 erstreckenden Schmalseiten 44 der Förderelemente 28 deutlich kürzer als die Längsseiten 42 und messen im gezeigten Ausführungsbeispiel weniger als ein Drittel des Innendurchmessers des Gehäuses 14.

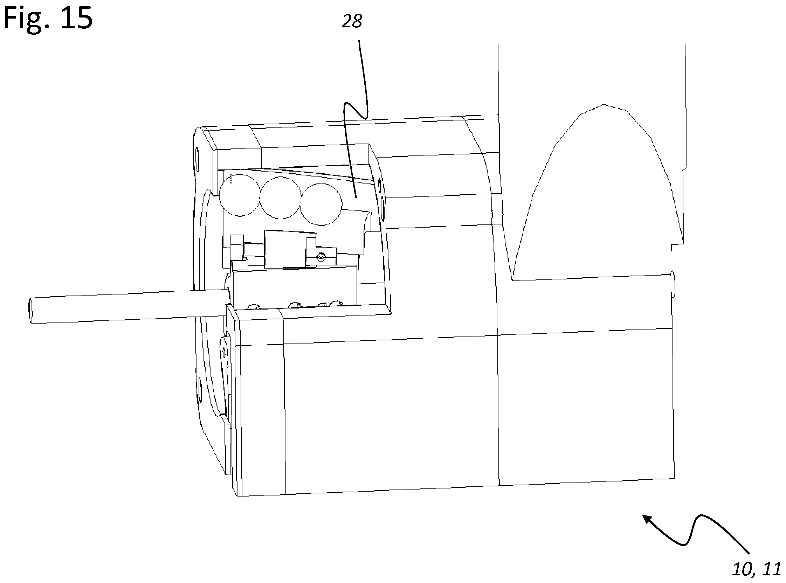

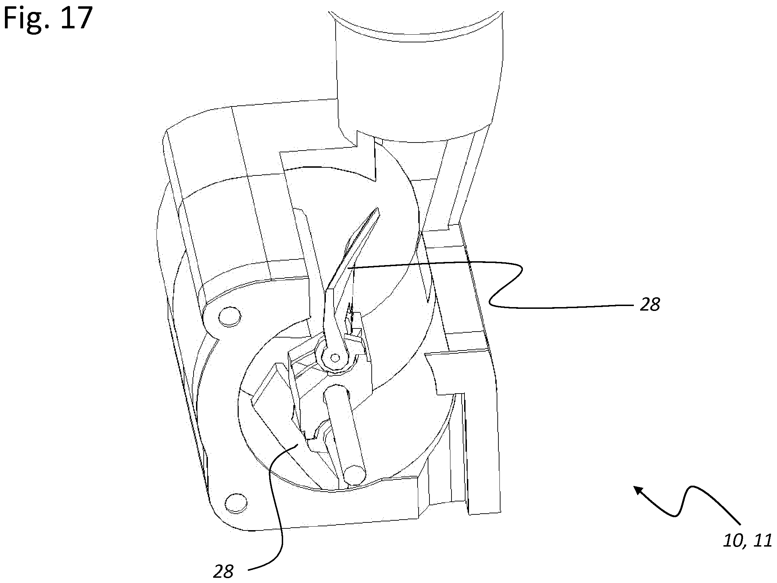

Die Figuren 15 bis 17 zeigen eine weitere Ausführungsvariante des Verteilaggregats 10 bzw. des Säaggregats 11, bei dem die Förderelemente 28 der rotierenden Fördereinrichtung 24 einen leicht wendelförmigen Verlauf in paralleler Richtung zur Welle 30 aufweisen, wodurch der axiale Vorschub der Körner in Richtung zum Gehäuseauslass 26 gegeben ist. Hierbei sind die Oberflächen der paddelartigen Förderelemente 28 in Richtung zu ihren Längsseiten 42 in einer Weise gekrümmt, dass sich eine wendelförmige Kontur ergibt, bei der ein spitzer Winkel zwischen der Längserstreckungsrichtung des Gehäuses und der Oberfläche der Förderelemente 28 gebildet ist. Diese gekrümmte Kontur ist besonders gut in Fig. 17 erkennbar. Bei dieser Variante kann ggf. auf die gewindeartige Strukturierung der Innenmantelfläche 16 verzichtet werden, da die wendelartige Kontur der Förderelemente 28 für den axialen Kornvorschub sorgt. Dabei bildet eine radial nach innen vorstehenden Kante über die Innenmantelfläche 16 eine axiale Vorschubsbegrenzung bzw. Führung, wie dies bspw. aus der Fig. 15 (linker Kornanschlag) erkennbar ist, so dass nur das jeweils erste aufgereihte Korn den Dosierer verlässt. Der leichte axiale Vorschub kann ebenfalls durch die Luftströmung, und oder dem ständigen Zuführen von Körnern und die daraus resultierenden leichten Eigenverdrängung erfolgen. Selbstverständlich sind auch Kombinationen aus wendelförmigen Förderelementen und gewindeartiger Strukturierung unterschiedlicher Gestalt und Tiefe möglich und sinnvoll.

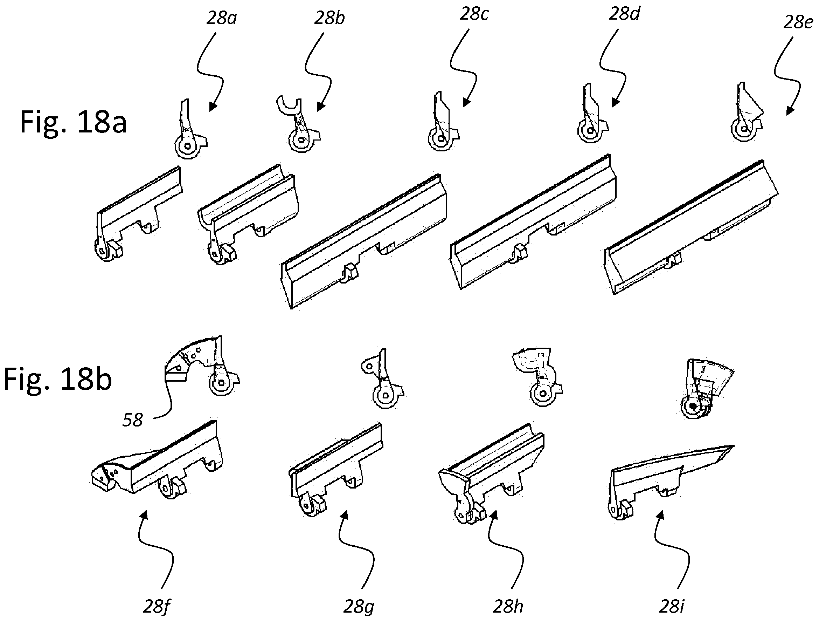

Die Figuren 18a und 18b zeigen verschiedene alternative Ausführungsvarianten der Förderelemente 28, die je nach zu vereinzelndem Gut unterschiedlich gestaltet und dimensioniert sein können. So kann das in Fig. 18a links gezeigte Förderelement 28a bspw. besonders gut für die Kornvereinzelung bei Weizen eingesetzt werden, während bspw. das daneben abgebildete Förderelement 28b für Raps eingesetzt werden kann. Die weiteren Varianten 28c, 28d und 28e können sich bspw. für Soja oder ähnlich geformte Körner eignen.

Die in Fig. 18b gezeigten Varianten der Förderelemente 28 sind jeweils mit Gegengewichten 58 versehen, so dass ggf. auf Federelemente im Bereich der Schwenklagerung der Förderelemente 28 an der Welle 30 verzichtet werden kann. Die angeformten Gegengewichte 58 können vielmehr für die radiale Ausrichtung der Förderelemente 28 bei schneller Drehung der Welle 30 sorgen, während sie bei einer auftretenden Verstopfung oder einem Widerstand problemlos ausweichen können. Bei den Varianten gemäß Fig. 18b kann bspw. das Förderelement 28f für Weizen verwendet werden, während sich die Variante 28h bspw. für Raps eignen kann. Die Variante 28i zeigt einen wendelförmigen Verlauf, wie er bereits in den Figuren 15 bis 17 gezeigt ist.

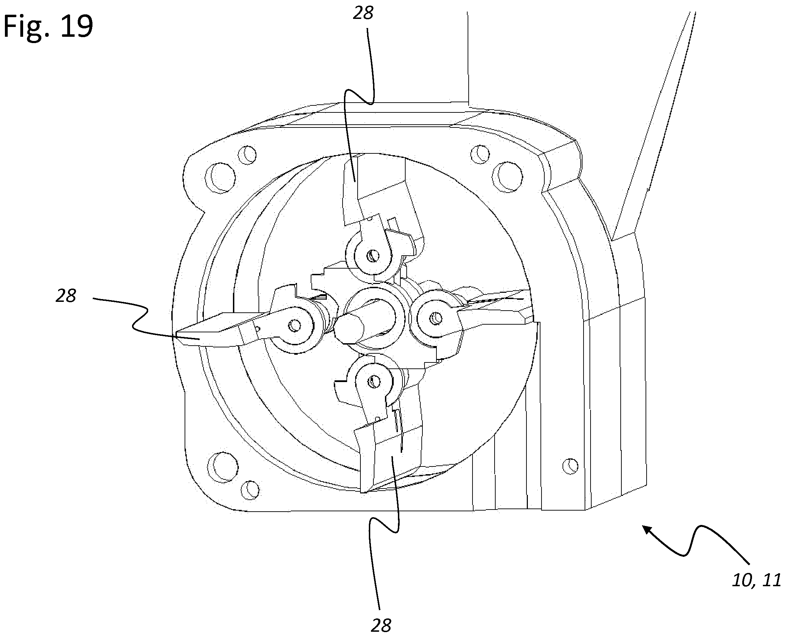

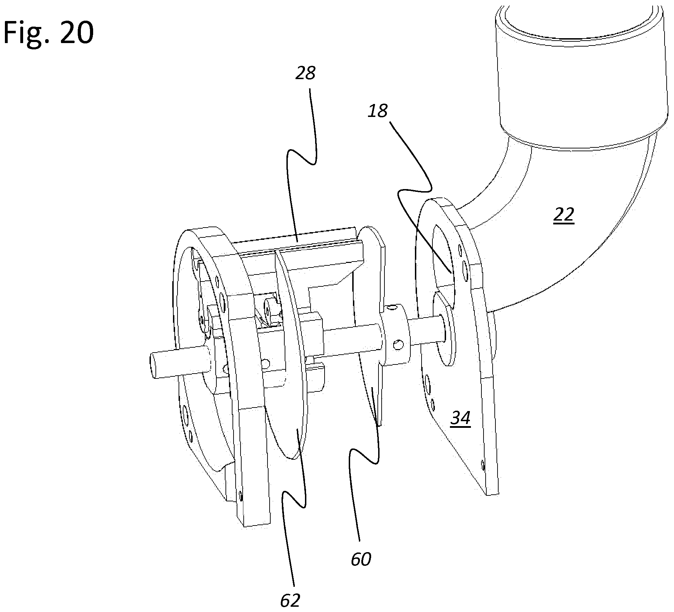

Wie es die Figuren 1 bis 17 erkennen lassen, kann die rotierende Fördereinrichtung 24 bspw. zwei gegenüber liegend angeordnete Förderelemente 28 aufweisen, die über eine geeignete Befestigung an der Welle 30 verankert sind. Es sind jedoch gleichermaßen Varianten möglich, bei denen nur ein Förderelement 28 rotiert (Fig. 20) oder bei denen drei, vier oder mehr gleichartig oder unterschiedlich geformte paddelartige Förderelemente 28 vorgesehen sind, die jeweils gleichmäßig voneinander beabstandet an der zentralen Welle 30 angeordnet sind. Die Fig. 19 zeigt bspw. eine Variante mit vier im Winkel von jeweils 90° zueinander stehenden Förderelementen 28, die gleichmäßig verteilt an der Welle 30 angeordnet sind.

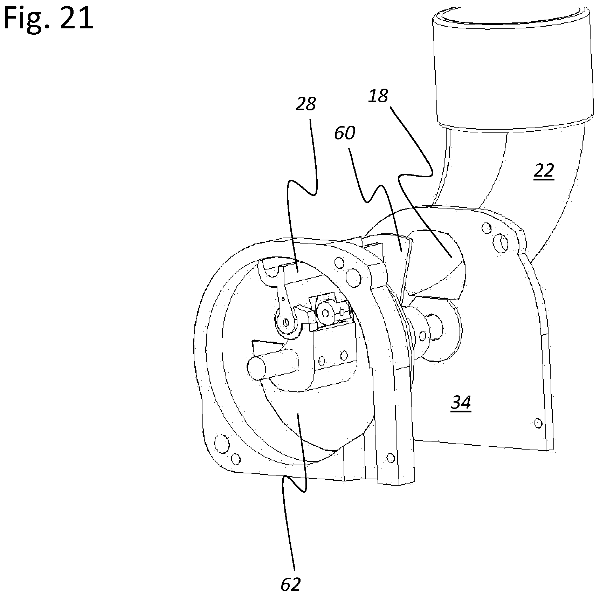

Die in Fig. 20 und Fig. 21 gezeigte Variante mit nur einem Förderelement 28 bzw. 28h, das entsprechend Fig. 18b ausgestaltet sein kann, kann bspw. für die Vereinzelung von Raps eingesetzt werden. Das dort gezeigte Förderelement 28 kann darüber hinaus mit halbkreisförmigen Scheiben 60 und 62 zusammenwirken, die ein direktes Durchströmen der kleinen Rapskörner im Gehäuse 14 verhindern. Die sehr kleinen Rapskörner werden somit an den als Prallscheiben ausgebildeten Scheiben 60 und 62 verzögert und daran gehindert, unkontrolliert zum Ausgang 26 zu drängen. So kann eine der halbkreisförmigen und mit der Welle 30 rotierenden Scheiben 60 zwischen der axial in die erste Stirnseite 34 des Gehäuses 14 mündende Einlassöffnung 18 und dem beabstandet von der Stirnseite 34 rotierenden Förderelement 28 angeordnet sein, während eine zweite Scheibe 62 in Nähe der in der zweiten Stirnseite 36 befindlichen Auslassöffnung 26 angeordnet sein kann. Während die erste Scheibe 60 im gezeigten Ausführungsbeispiel ein Kreissegment von ca. 180° abdeckt, kann die zweite Scheibe 62 ein Kreissegment von bspw. 270° abdecken, so dass die im Gehäuse 14 befindlichen Rapskörner effektiv daran gehindert werden, vorzeitig den Auslass zu erreichen, bevor sie dort in vereinzelter Form abgegeben werden.

Um Blockaden zu vermeiden, können die paddelartigen Förderelemente 28 jeweils federnd an der zentralen Welle 30 aufgehängt sein, so dass sie bei erhöhtem Widerstand ausweichen können. Die Figuren 4 bis 12, Fig. 16, 17 und 19 lassen entsprechende Schwenkmechanismen 46 erkennen, die vorzugweise eine Schwenkbewegung der Förderelemente 28 um einen definierten Schwenkwinkel zulassen, sobald sie durch zu viele Körner, durch Fremdstoffe wie Steine, Holz o. dgl. blockiert werden. Auf diese Weise werden Beschädigungen verhindert. Wie bereits anhand der Fig. 18b erwähnt wurde, können anstelle der federnden Aufhängung an der Welle 30 auch Gegengewichte 58 für die Ausrichtung der Förderelemente 28 und für deren Ausweichbewegungen sorgen.

Die paddelartige Oberfläche jedes Förderelementes 28 kann eine Konturierung aufweisen, bspw. einen Knick oder eine konkave Wölbung (vgl. Fig. 15 - 17). Eine solche Konturierung kann einen vorteilhaften Einfluss auf die Kornförderung haben. Zudem ist es sinnvoll, wenn die paddelartigen Förderelemente 28 jeweils in möglichst geringen Abständen zur Innenmantelfläche 16 des Gehäuses 14 rotieren, wie dies ebenfalls aus Fig. 3 hervorgeht. Diese Abstände sollten kleiner sein als die Hälfte des kleinsten Korndurchmessers des auszubringenden Verteilgutes, so dass kein Verklemmen der Körner 12 zwischen den Förderelementen 28 und der Innenmantelfläche 16 des Gehäuses 14 droht. Außerdem sollten die paddelartigen Förderelemente 28 im Interesse einer hohen Verteil- und Vereinzelungsqualität in ihrer Breite über einen Teil der Auslassöffnung 26 reichen, so dass diese bei rotierender Fördereinrichtung 24 von den Förderelementen 28 überstrichen und das Verteilgut nahezu tangential ausgeschleudert wird. Durch Einströmung einer gleichmäßigen, nicht pulsierenden Luftströmung 20 mit ungefähr konstantem Volumenstrom an Luft und an mitgenommenen Körnern 12 in das Gehäuseinnere mit der darin rotierenden Fördereinrichtung 24 wird ein funktionierendes Einzelkornsäaggregat zur Verfügung gestellt, bei dem die Körner 12 vereinzelt und in gleichmäßigen Abständen voneinander durch die Auslassöffnung 26 abgegeben werden.

Die zentrale Welle 30 der Fördereinrichtung 24 kann bspw. elektromotorisch angetrieben sein. Wahlweise kann die zentrale Welle 30 der Fördereinrichtung 24 bzw. die drehbaren Förderelemente 28 auch über die durch die Einlassöffnung 18 ins Gehäuse 14 geleitete Luftströmung 20 angetrieben sein.

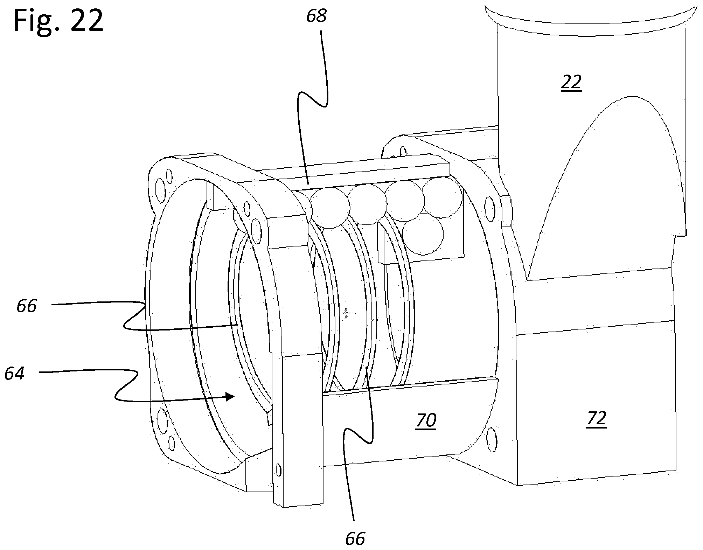

Die Figuren 22 bis 25 zeigen eine weitere alternative Ausführungsvariante des Verteilaggregats 10, bei dem auf eine zentrale Welle verzichtet ist. Stattdessen werden die Körner 12 durch einen rotierenden Gehäuseabschnitt 70 mit Quersteg 68 und einer feststehenden Windung 66 durch das Gehäuse 14 in axialer Richtung zum Kornausgang bzw. zur Auslassöffnung 26 befördert. Die gegenüber dem rotierenden Gehäuseabschnitt 70 und dem Quersteg 68 feststehende Spirale 64 mit Windungen 66 konstanter Steigung, die in einem Abstand zur drehbaren Innenmantelfläche 16 des rotierenden Gehäuseabschnittes 70 angeordnet ist, schiebt die Körner 12 axial zum Kornausgang. Die Windungen 66 sind fest mit dem feststehenden Gehäuseteil 72 und/oder mit dem feststehenden Kornausgang 26 verbunden. Bei dieser Variante werden die Körner 12 durch die rotationsbedingten Zentrifugalkräfte nach außen an die Innenmantelfläche 16 des rotierenden Gehäuseabschnittes 66 gedrängt. Der rotierende Quersteg 68 sorgt für die Vorschubbewegung der Körner 12 in Rotationsrichtung entlang des Gehäuseumfangs, während die ortsfesten Windungen 66 der nicht rotierenden Spirale 64 für einen axialen Vorschub in Richtung vom Einlass 18 zum Auslass 26 sorgen. Um dies zu erreichen, muss der Abstand der Spiralwindungen 66 von der Innenmantelfläche 16 des rotierenden Gehäuseabschnittes 70 zumindest geringfügig geringer sein als der kleinste Korndurchmesser, während die Gewindesteigung der Windungen 66 je nach Bedarf ausgestaltet sein kann. Die Steigung kann sich nach der Korngröße, dem gewünschten Vorschub im Zusammenhang mit der Umdrehungsgeschwindigkeit des Quersteges 68 sowie weiterer Säparameter richten.

Es muss an dieser Stelle nicht gesondert erwähnt werden, dass die beiden Stirnseiten 34 und 36 des Gehäuses 14 normalerweise geschlossen sind. Die entsprechenden Deckel fehlen in einigen der Darstellungen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Verteilaggregat
11 Säaggregat
12 Korn, Samenkorn, Samenkörner
13 Zusammenballung
14 Gehäuse
16 Innenmantelfläche
18 Einlassöffnung
20 Luftströmung
22 Anschlussstutzen
24 Fördereinrichtung
26 Auslassöffnung
28 Förderelement, paddelartiges Förderelement
30 Welle
32 Strukturierung, spiralartige/-förmige Strukturierung
34 erste Stirnseite
36 zweite Stirnseite
38 Umdrehungsrichtung (Welle, Fördereinrichtung)
40 vereinzelter Gutstrom
42 Längsseite
44 Schmalseite
46 Schwenkmechanismus
48 kreisförmige Bewegung
50 tangentiale Bewegung
52 Rampe
54 gekrümmter Verlauf
56 axiale Bewegung
58 Gegengewicht
60 erste Scheibe
62 zweite Scheibe
64 Spirale
66 Windung
68 Quersteg
70 rotierender Gehäuseabschnitt
72 feststehender Gehäuseabschnitt

## Patentansprüche

1. Verteilaggregat (10) für körniges Gut wie Samenkörner (12), Dünger o. dgl., insbesondere Säaggregat (11) einer Verteil- oder Sämaschine, umfassend ein Gehäuse (14) in einer zylindrischen Form mit wenigstens einer Einlassöffnung (18) für die Beförderung körnigen Gutes oder beförderter Samenkörner (12) und einer Auslassöffnung (26) sowie einer rotierenden Fördereinrichtung (24) mit wenigstens einem rotierenden, ungefähr axial und radial zum Gehäuse (14) angeordneten bzw. verlaufenden Förderelement (28) zur Erfassung des körnigen Gutes bzw. der Samenkörner (12), wobei diese durch Fliehkräfte an einem Innenmantelbereich (16) des Gehäuses (14) gehalten werden, sich dort drängen und gegeneinander ausrichten und in einer Linie ordnen bzw. aufreihen, wobei die Aufreihung am Förderelement (28) bzw. im Innenmantelbereich (16) einen leichten gerichteten Vorschub in eine axiale Richtung erfährt, um die Position eines gezielt abgeführten Kornes (12) sicher zu besetzen, so dass jeweils nur ein einzelnes Korn (12) am Ende der Aufreihung in einer vordefinierten Bahn an der Mantelfläche (16) entlang verläuft und am Ende des Vereinzelungsprozesses die Auslassöffnung (26) annähernd tangential verlässt,
**dadurch gekennzeichnet, dass** die vom Förderelement (28) transportierten oder mitgenommenen Körner (12) mindestens einen einseitigen Freiraum haben, um überschüssige Körner (12) abzudrängen, damit sich am Förderelement (28) eine annähernd lineare Kornausrichtung ausbilden kann.

2. Verteilaggregat nach Anspruch 1 oder 2, bei dem das Gehäuse (14) eine zylindrische oder einseitig konisch zulaufende Innenmantelfläche (16) aufweist.

3. Verteilaggregat nach Anspruch 1 oder 2, das mit einer durch die Einlassöffnung (18) geführten Luftströmung (18) beaufschlagt ist, die das körnige Gut oder die Samenkörner (12) fördert, wobei der Luftstrom (20), mit dem die Körner (12) herangeführt werden, durch den Dosierer (10) führt und die abgegebenen Körner (12) in der oder nach der Abgabe weiter trägt.

4. Verteilaggregat nach einem der Ansprüche 1 bis 3, bei dem jedes geförderte Korn (12) vor der Kornabgabe durch den Auslass (26) eine Kreisbewegung von mindestens 360 Grad durchläuft, wobei es vom wenigstens einen Förderelement (28) auf einer annähernd zylindrischen Mantelfläche (16) gehalten wird und gleichzeitig einen leichten axialen Vorschub in Richtung zur Kornabgabe am Auslass (26) erfährt.

5. Verteilaggregat nach einem der Ansprüche 1 bis 4, bei dem die Fördereinrichtung (24) wenigstens ein an der Innenmantelfläche (16) entlang streichendes paddelartiges Förderelement (28) aufweist.

6. Verteilaggregat nach einem der Ansprüche 1 bis 5, bei dem der Vorschub der Körner (12) zumindest im Bereich der Auslassöffnung (26) für das letzte Korn durch eine führende Kontur vorgegeben ist.

7. Verteilaggregat nach einem der Ansprüche 1 bis 6, bei dem die Innenmantelfläche (16) des Gehäuses (14) eine Strukturierung (32) in Gestalt einer durchgängigen Spirale oder Führungsbahn aufweist, die von einer Stirnseite (34) zur gegenüber liegenden Stirnseite (36) oder einen Teilabschnitt davon reicht, wobei die spiralartige Strukturierung (32) in Umdrehungsrichtung (38) der Fördereinrichtung (24) im Bereich der Einlassöffnung (18) beginnt.

8. Verteilaggregat nach Anspruch 7, bei dem die spiralartige Strukturierung (32) Abschnitt jeweils unterschiedlicher Steigung aufweist, wobei die Steigung zur Auslassöffnung (26) hin größer ist als im Bereich der Einlassöffnung (18).

9. Verteilaggregat nach Anspruch 5 und einem der Ansprüche 6 bis 8, bei dem eine Längsseite (42) des wenigstens einen paddelartigen Förderelementes (28) sich nahezu parallel zur Längserstreckungsrichtung des Gehäuses (14) erstreckt, wobei eine Schmalseite (44) des Förderelementes (28) kürzer ist als die Längsseite (42) und/oder wobei das wenigstens eine paddelartige Förderelement (28) in seiner Breite über die Auslassöffnung (26) reicht, so dass diese bei rotierender Fördereinrichtung (24) überstrichen wird.

10. Verteilaggregat nach Anspruch 5 und einem der Ansprüche 6 bis 9, bei dem die rotierende Fördereinrichtung (24) zwei, drei, vier oder mehr gleichartig oder unterschiedlich geformte paddelartige Förderelemente (28) aufweist, die jeweils gleichmäßig voneinander beabstandet an einer zentralen Welle (30) angeordnet sind.

11. Verteilaggregat nach Anspruch 5 und einem der Ansprüche 6 bis 10, bei dem das paddelartige Förderlelement (28) bzw. die paddelartigen Förderelemente (28) jeweils nachgiebig und/oder federnd an der zentralen Welle (30) aufgehängt ist/sind, so dass es/sie bei erhöhtem Widerstand ausweichen kann/können.

12. Verteilaggregat nach Anspruch 5 und einem der Ansprüche 6 bis 11, bei dem das paddelartige Förderlelement (28) bzw. die paddelartigen Förderelemente (28) der Fördereinrichtung (24) elektromotorisch angetrieben ist/sind.

13. Verteilaggregat nach Anspruch 5 und einem der Ansprüche 6 bis 12, bei dem das paddelartige Förderelement (28) bzw. die paddelartigen Förderelemente (28) der Fördereinrichtung (24) über die durch die Einlassöffnung (18) ins Gehäuse (14) geleitete Luftströmung (20) angetrieben ist/sind.

## Claims

1. A distribution unit (10) for granular material, such as seeds, (12), fertiliser, or the like, in particular a sowing unit (11) of a distribution machine or sowing machine, comprising a housing (14) in a cylindrical form, with at least one inlet opening (18) for the conveyance of granular material or conveyed seeds (12), and with an outlet opening (26), as well as with a rotating conveying means (24), with at least one rotating conveying element (28) for collecting the granular material or, as the case may be, the seeds (12), said conveying element (28) being disposed or running about axially and radially to the housing (14), wherein said seeds (12) are held to an inner cover area (16) of the housing (14) by centrifugal forces, where they cluster and align themselves against each other and arrange themselves in a row or line up, as the case may be, wherein the line-up at the conveying element (28) or, as the case may be, in the inner cover area (16) undergoes a slight, directed forward feed in an axial direction in order for the position of a specifically released seed (12) to be safely occupied such that in each case only one single seed (12) runs along the cover surface (16) in a predefined path at the end of the line-up and approximately tangentially leaves the outlet opening (26) at the end of the separation process, **characterised in that** the seeds (12) transported or carried along by the conveying element (28) have a free space at least on one side for pushing aside excess seeds (12) so that an approximately linear seed alignment can form at the conveying element (28).

2. The distribution unit as recited in claim 1, with the housing (14) having an inner cover surface (16) that is cylindrical or that conically tapers on one side.

3. The distribution unit as recited in claim 1 or 2 that is impinged by an air flow (20) directed through the inlet opening (18), with the air flow (20) conveying the granular material or the seeds (12), wherein the air flow (20), by which the seeds are advanced, leads through the metering device (10) and continues to carry the released seeds (12) in or downstream from the release.

4. The distribution unit as recited in one of the claims 1 to 3, with each conveyed seed (12) undergoing a circular movement of at least 360 degrees prior to the seed release through the outlet (26), wherein the seed (12) is held by the at least one conveying element (28) to an approximately cylindrical cover surface (16) and simultaneously undergoes a slight axial forward feed toward the seed release at the outlet (26).

5. The distribution unit as recited in one of the claims 1 to 4, with the conveying means (24) having at least one paddle-type conveying element (28) that brushes along the inner cover surface (16).

6. The distribution unit as recited in one of the claims 1 to 5, with the forward feed of the seeds (12) being specified for the most recent seed by a guiding contour at least in the area of the outlet opening (26).

7. The distribution unit as recited in one of the claims 1 to 6, with the inner cover surface (16) of the housing (14) having a structuring (32) in the shape of a continuous spiral or guideway, the structuring (32) reaching from one end face (34) to the oppositely located end face (36) or a partial section thereof, wherein the spiral-type structuring (32) begins in the area of the inlet opening (18) in direction of rotation (38) of the conveying means (24).

8. The distribution unit as recited in claim 7, with the spiral-type structuring (32) having sections of in each case a different gradient, wherein the gradient toward the outlet opening (26) is greater than in the area of the inlet opening (18).

9. The distribution unit as recited in claim 5 and in one of the claims 6 to 8, with a longitudinal side (42) of the at least one paddle-type conveying element (28) extending nearly parallel to the longitudinal extension direction of the housing (14), wherein a narrow side (44) of the conveying element (28) is shorter than the longitudinal side (42), and/or wherein the at least one paddle-type conveying element (28) reaches in its width across the outlet opening (26) such that said outlet opening is brushed over in the instance of the conveying means (24) rotating.

10. The distribution unit as recited in claim 5 and in one of the claims 6 to 9, with the rotating conveying means (24) having two, three, four, or more similarly or differently formed paddle-type conveying elements (28), which are disposed at a central shaft (30) in each case evenly spaced apart from each other.

11. The distribution unit as recited in claim 5 and in one of the claims 6 to 10, with the paddle-type conveying element (28) or, as the case may be, the paddle-type conveying elements (28) being in each case suspended resiliently and/or springily on the central shaft (30) so that it/they can evade in the instance of increased resistance.

12. The distribution unit as recited in claim 5 and in one of the claims 6 to 11, with the paddle-type conveying element (28) or, as the case may be, the paddle-type conveying elements (28) of the conveying means (24) being electromotively driven.

13. The distribution unit as recited in claim 5 and in one of the claims 6 to 12, with the paddle-type conveying element (28) or, as the case may be, the paddle-type conveying elements (28) of the conveying means (24) being driven by an air flow (20) conducted into the housing (14) by way of the inlet opening (18).

## Revendications

1. Groupe de distribution (10) de produits granuleux tels que graines (12), engrais ou équivalents, notamment groupe semoir (11) d'une machine de distribution ou semoir, comprenant un boîtier (14) de forme cylindrique doté d'au moins un orifice d'admission (18) pour le transport de produits granuleux ou de graines transportées (12) et d'un orifice d'échappement (26) ainsi que d'un dispositif de transport (24) rotatif doté d'au moins un élément de transport (28) rotatif, agencé ou s'étendant de manière approximativement axiale et radiale par rapport au boîtier (14) pour détecter les produits granuleux ou les graines (12), ceux-ci étant maintenus par des forces centrifuges contre une zone de gaine intérieure (16) du boîtier (14), s'y pressant et s'y mettant en position les uns contre les autres et formant une ligne ou s'alignant, ledit alignement faisant l'objet, au niveau de l'élément de transport (28) ou de la zone de gaine intérieure (16), d'une légère avancée dans un sens axial pour occuper de manière sure la position d'une graine (12) évacuée volontairement, de telle sorte qu'à chaque fois, une seule graine (12) longe la surface de la gaine (16) à la fin de l'alignement et dans une voie prédéterminée pour quitter l'orifice d'échappement (26) de manière approximativement tangentielle à la fin du processus de désassociation, **caractérisé en ce que** les graines (12) transportées ou emportées par l'élément de transport (28) ont au moins un espace libre unilatéral pour repousser l'excédent de graines (12) de telle sorte que puisse se former au niveau de l'élément de transport (28) un sens de graines approximativement linéaire.

2. Groupe de distribution selon la revendication 1, dans lequel le boîtier (14) présente une surface de gaine intérieure (16) cylindrique ou se terminant unilatéralement en cône.

3. Groupe de distribution selon la revendication 1 ou 2 auquel est appliqué un courant d'air (20) conduit au travers de l'orifice d'admission (18), ledit courant d'air (20) transportant les produits granuleux ou les graines (12), le flux d'air (20) par lequel les graines (12) sont amenées passant par le doseur (10) et continuant de porter les graines (12) remises dans ou après la remise.

4. Groupe de distribution selon l'une quelconque des revendications 1 à 3, dans lequel chaque graine (12) transportée parcourt avant la remise de graine par l'échappement (26) un mouvement circulaire d'au moins 360°, ladite graine (12) étant maintenue par le au moins un élément de transport (28) sur une surface de gaine (16) approximativement cylindrique et faisant parallèlement l'objet d'une légère avancée axiale dans le sens de la remise de graine à l'échappement (26).

5. Groupe de distribution selon l'une quelconque des revendications 1 à 4, dans lequel le dispositif de transport (24) présente au moins un élément de transport (28) en forme de rame qui passe le long de la surface de gaine intérieure (16).

6. Groupe de distribution selon l'une quelconque des revendications 1 à 5, dans lequel l'avancée des graines (12) est donnée pour la dernière graine, au moins au niveau de l'orifice d'échappement (26), par un contour de guidage.

7. Groupe de distribution selon l'une quelconque des revendications 1 à 6, dans lequel la surface de gaine intérieure (16) du boîtier (14) présente une structure (32) sous la forme d'une spirale ou glissière continue qui va d'un bout (34) au bout opposé (36) ou à une portion de cela, la structure en spirale (32) commençant, dans le sens de révolution (38) du dispositif de transport (24), au niveau de l'orifice d'admission (18).

8. Groupe de distribution selon la revendication 7, dans lequel la structure en spirale (32) présente des tronçons ayant tous une inclinaison différente, l'inclinaison étant plus forte vers l'orifice d'échappement (26) qu'au niveau de l'orifice d'admission (18).

9. Groupe de distribution selon la revendication 5 et l'une quelconque des revendications 6 à 8, dans lequel un côté longitudinal (42) de l'au moins un élément de transport (28) en forme de rame s'étend presque parallèlement au sens d'allongement longitudinal du boîtier (14), un côté étroit (44) de l'élément de transport (28) étant plus court que le côté longitudinal (42) et/ou l'au moins un élément de transport (28) en forme de rame allant dans sa largeur jusqu'au-dessus de l'orifice d'échappement de telle sorte que celui-ci est rasé au cours d'une rotation du dispositif de transport (24).

10. Groupe de distribution selon la revendication 5 et l'une quelconque des revendications 6 à 9, dans lequel le dispositif de transport rotatif (24) présente deux, trois, quatre ou plusieurs éléments de transport (28) en forme de rame semblables ou de forme différente, lesdits éléments étant agencés sur un arbre central (30) chacun à équidistance l'un de l'autre.

11. Groupe de distribution selon la revendication 5 et l'une quelconque des revendications 6 à 10, dans lequel l'élément de transport (28) en forme de rame ou les éléments de transport (28) en forme de rame sont chacun accrochés à l'arbre central de manière semi-rigide et/ou élastique de telle sorte qu'il(s) puisse(nt) se dérober en cas de résistance élevée.

12. Groupe de distribution selon la revendication 5 et l'une quelconque des revendications 6 à 11, dans lequel l'élément de transport (28) en forme de rame ou les éléments de transport (28) en forme de rame du dispositif de transport (24) est/sont entraîné(s) par un moteur électrique.

13. Groupe de distribution selon la revendication 5 et l'une quelconque des revendications 6 à 12, dans lequel l'élément de transport (28) en forme de rame ou les éléments de transport (28) en forme de rame du dispositif de transport (24) est/sont entraîné(s) par le courant d'air (20) conduit au travers de l'orifice d'admission (18) dans le boîtier (14).
